(19) Europäisches Patentamt
European Patent Office
Office européen des brevets

(11) EP 3 546 733 A1

(12) EUROPEAN PATENT APPLICATION
published in accordance with Art. 153(4) EPC

(43) Date of publication:
**02.10.2019 Bulletin 2019/40**

(21) Application number: **17873462.0**

(22) Date of filing: **01.11.2017**

(51) Int Cl.:
***F02D 45/00*** (2006.01) ***F02D 41/22*** (2006.01)

(86) International application number:
**PCT/JP2017/039567**

(87) International publication number:
**WO 2018/096894 (31.05.2018 Gazette 2018/22)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.11.2016 JP 2016228735**

(71) Applicant: **Yanmar Co., Ltd.**
**Osaka-shi, Osaka 530-8311 (JP)**

(72) Inventors:
- **ASAI, Go**
  **Osaka-shi**
  **Osaka 530-8311 (JP)**
- **BELLISSIMA, Alessandro**
  **Firenze 50125 (IT)**
- **FERRARA, Giovanni**
  **Florence 50121 (IT)**
- **VICHI, Giovanni**
  **Florence 50121 (IT)**
- **BECCIANI, Michele**
  **Florence 50121 (IT)**
- **STIACCINI, Isacco**
  **Florence 50121 (IT)**
- **FERRARI, Lorenzo**
  **Sesto Fiorentino (Florence) 50019 (IT)**

(74) Representative: **Hinkelmann, Klaus**
**Patentanwaltskanzlei Hinkelmann**
**Lyonel-Feininger-Strasse 28**
**80807 München (DE)**

# (54) DEVICE AND METHOD FOR DIAGNOSING INTERNAL COMBUSTION ENGINE, AND DEVICE AND METHOD FOR CONTROLLING INTERNAL COMBUSTION ENGINE

(57) A diagnosis device for a multi-cylinder internal combustion engine having an exhaust turbocharger, the device configured to diagnose a fuel combustion state in each of cylinders in the internal combustion engine, includes: a rotational speed detector configured to output a signal corresponding to a rotational speed of the exhaust turbocharger or a signal corelated to fluctuation in the rotational speed of the exhaust turbocharger; and a fuel combustion state diagnosis unit configured to diagnose unevenness in fuel combustion states of the cylinders through a frequency analysis involving a fast Fourier transformation of a frequency characteristic of a signal output from the rotational speed detector.

FIG.4

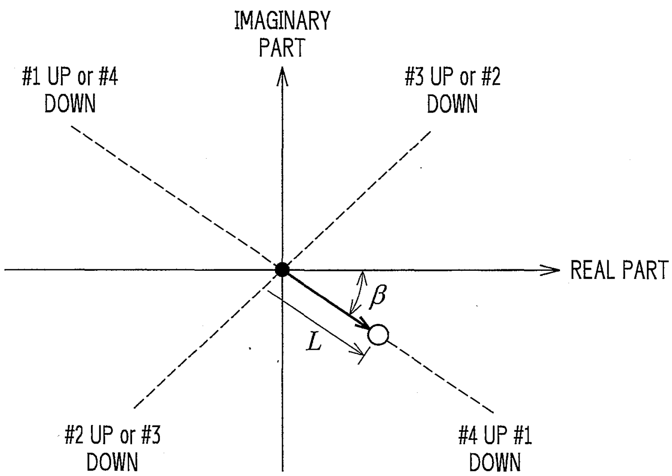




Printed by Jouve, 75001 PARIS (FR)

## Description

### Technical Field

The present invention relates to a diagnosis device and a diagnosis method for an internal combustion engine, as well as a control device and a control method of the internal combustion engine. In particular, the present invention relates to a diagnosis device and a diagnosis method for diagnosing a fuel combustion state in each of cylinders in a multi-cylinder internal combustion engine, as well as a control device and a control method of controlling such an internal combustion engine according to the result of the diagnosis.

### Background Art

Traditionally, it has been desirable to have fuel combustion properly taking place in each cylinder of a multi-cylinder internal combustion engine used for a ship, a vehicle, and the like, in order to suppress or reduce a drop in the engine power, an increase in rotational fluctuation, deterioration of exhaust emission, and the like. In a multi-cylinder internal combustion engine in general, the fuel feed rate (hereinafter, sometimes referred to as fuel injection amount) for each cylinder is adjusted by controlling a valve-open period of an injector, according to a fuel pressure of the fuel supply system (e.g., see Patent Literature 1; hereinafter, PTL 1).

However, due to variations in the manufacturing stage of the injectors and the like, or effects from deterioration over time, and the like, a fuel injection amount actually injected into a cylinder may deviate from a suitable amount. In such a case, fuel combustion does not properly take place in the cylinder (a target combustion amount is not achieved). For example, unevenness in the fuel injection amounts of the injectors of cylinders may cause problems such as a drop in the engine power, an increase in the rotational fluctuation, deterioration in the exhaust emission, and the like. It should be noted that these problems may also be caused by an effect from the fuel property, instead of the unevenness in the fuel injection amount of each injector.

### Citation List

#### Patent Literature

PTL 1: Japanese Patent Application Laid-Open No. 2001-65397
PTL 2: Japanese Patent No. 5770657

### Summary of Invention

#### Technical Problem

The inventors of present invention conducted a study on diagnosis of the fuel combustion states of cylinders (e.g., diagnosing whether or not there is unevenness in the fuel injection amounts of injectors), and control of the internal combustion engine based on the results of the diagnosis (e.g., correcting a fuel injection amount to solve the unevenness in the fuel injection amounts from the injectors). Since the fuel combustion state in each cylinder corelates to the rotational speed of the turbocharger in a multi-cylinder internal combustion engine having an exhaust turbocharger (hereinafter, sometimes referred to as turbocharger), the inventors of the present invention have focused on using this for diagnosing the fuel combustion state of each cylinder, and controlling the internal combustion engine according to the diagnosis result.

Although Patent Literature 2 (hereinafter, PTL 2) discloses a use of a turbo sensor for detecting the rotational speed of the turbocharger, PTL 2 only discloses detection of disconnection of the turbo sensor based on the output signal from the turbo sensor, and does not contain disclosure as to diagnosing the fuel combustion state in each cylinder and controlling the internal combustion engine according to the diagnosis result.

The present invention is made in view of the above problems, and it is an object of the present invention to provide a diagnosis device and a diagnosis method for an internal combustion engine which enable proper diagnosis of the fuel combustion state in each cylinder of the multi-cylinder internal combustion engine, as well as to provide a control device and a control method of the internal combustion engine which can properly control the internal combustion engine based on the result of the diagnosis.

Solution to Problem

A solution of the present invention for achieving the above object is a diagnosis device for a multi-cylinder internal combustion engine having one or more exhaust turbochargers, the device configured to diagnose a fuel combustion state in each of cylinders in the internal combustion engine, including: a rotational speed detector configured to output a signal corresponding to a rotational speed of the exhaust turbocharger or a signal corelated to fluctuation in the rotational speed of the exhaust turbocharger; and a fuel combustion state diagnosis unit configured to diagnose unevenness in fuel combustion states of the cylinders through a frequency analysis involving a fast Fourier transformation of a frequency characteristic of a signal output from the rotational speed detector.

In the above specified structure, the fuel combustion state diagnosis unit configured to diagnose unevenness in fuel combustion states of the cylinders through a frequency analysis using a fast Fourier transform of a frequency characteristic of a signal output from the rotational speed detector (a signal corresponding to a rotational speed of the exhaust turbocharger or a signal correlated to fluctuation in the rotational speed of the exhaust turbocharger). That is, utilizing the correlation between unevenness in the fuel combustion states among the cylinders and the strength in the frequency component of the turbocharger rotational speed. As a result, the fuel combustion state of each cylinder can be appropriately diagnosed by utilizing the output signal from the rotational speed detector.

Further, it is preferable that the fuel combustion state diagnosis unit is configured to determine an operating point corresponding to a complex plane through the frequency analysis involving the fast Fourier transformation, and based on an angle of a vector ranging from the origin of the complex plane to the operating point with respect to a coordinate axis of the complex plane and a length of the vector, diagnose unevenness in the fuel combustion states among cylinders.

This way, unevenness in the fuel combustion state of each cylinder can be easily diagnosed based on the vector on the complex plane, and the diagnosis result can be easily ascertained.

In this case, the fuel combustion state diagnosis unit is configured to specify a cylinder whose fuel combustion state is different from the other cylinders, based on an angle formed by the vector with respect to the coordinate axis of the complex plane, and specify a deviation in a state quantity related to fuel combustion in the specified cylinder from state quantities of the other cylinders, based on a length of the vector.

With this, a cylinder whose fuel combustion state is different from the other cylinders can be specified from the vector on the complex plane. Further, a deviation in the state quantity related to fuel combustion in this specified cylinder from the state quantities of the other cylinders can be specified. That is, unevenness in the fuel combustion states among the cylinders can be diagnosed in detail.

Further, it is preferable that the fuel combustion state diagnosis unit compares a strength of a frequency resulting from dividing a combustion frequency obtained from a signal output from the rotational speed detector by the number of cylinders of the multi-cylinder internal combustion engine with a strength of a frequency resulting from dividing the combustion frequency by "1/2" of the number of cylinders of the multi-cylinder internal combustion engine, and if the strength of the former frequency is higher than the strength of the latter frequency, diagnoses that a fuel combustion state in one of the cylinders is different from fuel combustion states of the other cylinders, or that fuel combustion states in cylinders successively operating on a combustion stroke are different from fuel combustion states of the other cylinders.

Further, it is preferable that the fuel combustion state diagnosis unit compares a strength of a frequency resulting from dividing a combustion frequency obtained from a signal output from the rotational speed detector by the number of cylinders of the multi-cylinder internal combustion engine with a strength of a frequency resulting from dividing the combustion frequency by "1/2" of the number of cylinders of the multi-cylinder internal combustion engine, and if the strength of the latter frequency is higher than the strength of the former frequency, diagnoses that fuel combustion states in cylinders whose pistons reciprocate in the same phase but not successively operating on a combustion stroke are different from fuel combustion states of the other cylinders.

With these diagnosis operations, a cylinder whose fuel combustion state is different from those of the other cylinders can be accurately specified.

Further, it is preferable that a state quantity of at least one of an engine rotational speed, an engine load, a coolant temperature, an intake air pressure, an exhaust pressure, an intake air temperature of the multi-cylinder internal combustion engine, and an atmospheric pressure is set as an executable condition for combustion state diagnosis; and the fuel combustion state diagnosis unit diagnoses unevenness in fuel combustion states among the cylinders, when the executable condition for the combustion state diagnosis is established.

The state quantity may affect the reliability of the combustion state diagnosis. Therefore, an executable condition of the state quantity is set for combustion state diagnosis, in order to enable diagnosis of unevenness in the combustion states only when the state quantity is within a range that allows a reliable combustion state diagnosis. That is, while the state quantity is a value that may negatively affect the reliability of the combustion state diagnosis, the combustion state diagnosis is disabled. This way, a sufficiently reliable combustion state diagnosis can be achieved.

Further, it is preferable that the multi-cylinder internal combustion engine comprises an EGR device configured to recirculate exhaust gas in an exhaust system to an air-intake system; and the fuel combustion state diagnosis unit is configured to diagnose unevenness in fuel combustion states among the cylinders on condition that the recirculation of the exhaust gas by the EGR device is stopped.

While the exhaust gas is recirculated to the air-intake system by the EGR device, the combustion amount in the cylinder may vary due to variation in the amount of gas flowing in the air-intake system. This will lead to difficulty in achieving a sufficiently reliable combustion state diagnosis. For this reason, diagnosis of the fuel combustion states of the cylinders is performed on condition that the recirculation of the exhaust gas by the EGR device is stopped. This way, a sufficiently reliable combustion state diagnosis can be achieved.

It is preferable that, in the multi-cylinder internal combustion engine having the exhaust turbochargers arranged serially with respect to a flow of gas, the rotational speed detector configured to output a signal according to the rotational speed of at least one of the exhaust turbochargers is arranged nearby a high-pressure side exhaust turbocharger, and outputs a signal according to the rotational speed of the high-pressure side exhaust turbocharger.

The present invention uses a phenomenon in which the rotational speed of the exhaust turbocharger varies due to energy pulsation at the time of exhaust blow down in each cylinder. By arranging the rotational speed detector nearby the high-pressure side exhaust turbocharger whose rotational speed largely varies, affected by the energy pulsation.

Further, a diagnosis method performed in the above diagnosis device for an internal combustion engine is also within the scope of the technical idea of the present invention. Namely, a diagnosis method for a multi-cylinder internal combustion engine having an exhaust turbocharger, the method configured to diagnose a fuel combustion state in each of cylinders in the internal combustion engine, includes the step of diagnosing unevenness in fuel combustion states of the cylinders through a frequency analysis using a fast Fourier transformation of a frequency characteristic of a signal according to a rotational speed of the exhaust turbocharger or a signal having correlation with a rotational speed of the exhaust turbocharger.

With the above diagnosis method, the fuel combustion state of each cylinder is appropriately diagnosed, effectively utilizing a signal corresponding to a rotational speed of the exhaust turbocharger or a signal correlated to fluctuation in the rotational speed of the exhaust turbocharger, as hereinabove described.

Further, a control device configured to control the internal combustion engine according to a diagnosis result by the diagnosis device for the internal combustion engine is also within the scope of the technical idea of the present invention. Namely, a control device for an internal combustion engine includes: an unevenness cancelling correction unit configured to correct a control amount by varying the fuel combustion state of each cylinder so as to cancel the unevenness in the fuel combustion states of the cylinders.

With this, the unevenness cancelling correction unit corrects the control amount for varying the fuel combustion state according to the diagnosis result. Therefore, the unevenness in the fuel combustion states of the cylinders is cancelled. This enables appropriate fuel combustion in each cylinder, and a drop in the engine power, an increase in the rotational fluctuation, deterioration of the exhaust emission, and the like can be suppressed or reduced.

For an exhaust turbocharger having at least one of a wastegate valve and a variable geometry mechanism, the unevenness cancelling correction unit is preferably configured to correct the control amount according to an exhaust gas passage area adjusted by an opening degree of the wastegate valve or by the variable geometry mechanism.

While the wastegate valve and the variable displacement mechanism are activated, an optimum control amount will be varied due to the effect of the activation. However, the control amount can be optimized by having the unevenness cancelling correction unit correct the control amount according to an opening degree of the wastegate valve or the exhaust gas passage area adjusted by the variable geometry mechanism.

Further, a control method configured to control the internal combustion engine according to a diagnosis result by the diagnosis method for the internal combustion engine is also within the scope of the technical idea of the present invention. Namely, the control method for an internal combustion engine includes a step of correcting a control amount by varying the fuel combustion state of each cylinder so as to cancel the unevenness in the fuel combustion states of the cylinders.

As hereinabove described, with this control method, the control amount for varying the fuel combustion state is corrected according to the diagnosis result. Therefore, the unevenness in the fuel combustion states of the cylinders is cancelled. This optimizes the fuel combustion in each cylinder and enables appropriate fuel combustion in each cylinder, and a drop in the engine power, an increase in the rotational fluctuation, deterioration of the exhaust emission, and the like can be suppressed or reduced.

Further, the following diagnosis device as another solution is also within the scope of the technical idea of the present invention. Namely, a diagnosis device for a multi-cylinder internal combustion engine having an exhaust turbocharger, the device configured to diagnose a fuel combustion state in each of cylinders in the internal combustion engine, includes: an internal combustion engine rotational speed detection unit configured to output a signal corresponding to a rotational speed of the multi-cylinder internal combustion engine; a turbocharger rotational speed detection unit configured to output a signal corresponding to a rotational speed of the exhaust turbocharger; and a fuel combustion state diagnosis unit configured to diagnose a fuel combustion state of each cylinder by calculating a total fuel feed rate to the cylinders within a single cycle of the internal combustion engine, using a frequency characteristic of a signal output from the turbocharger rotational speed detection unit and an engine rotational speed calculated based on the signal output from the internal combustion engine rotational speed detection unit, as parameters.

With this specified structure, the total fuel feed rate can be calculated by utilizing the correlation among the frequency characteristic of the signal output from the turbocharger rotational speed detection unit, the engine rotational speed, and the total fuel feed rate to cylinders of the internal combustion engine within a single cycle. As a result, the fuel combustion state in each cylinder can be appropriately diagnosed.

Further, a control device configured to control the internal combustion engine according to a diagnosis result by the diagnosis device for the internal combustion engine is also within the scope of the technical idea of the present invention. That is, a control device for an internal combustion engine includes a fuel feed rate correction unit configured to obtain an average fuel feed rate by dividing, by the number of cylinders, a total fuel feed rate in the cylinders within a single cycle of the multi-cylinder internal combustion engine, and correct the fuel feed rate of each cylinder by an amount of deviation between the average fuel feed rate and a target fuel feed rate of each cylinder determined according to a required output.

With this structure, the fuel feed rate correction unit can correct the fuel feed rate to each cylinder according to the diagnosis result, and match the actual total fuel feed rate with a total fuel feed rate for required output. As a result, a total fuel feed rate corresponding to the required output can be obtained.

## Advantageous Effects of Invention

The present invention diagnoses a fuel combustion state of each cylinder, and controls the internal combustion engine according to the diagnosis result, utilizing the fact that the fuel combustion state in each cylinder correlates to the rotational speed of the turbocharger in a multi-cylinder internal combustion engine having an exhaust turbocharger. Therefore, a fuel combustion state in each cylinder can be appropriately diagnosed, and the internal combustion engine can be appropriately controlled according to the result of the diagnosis. Further, the diagnosis of the combustion state related to the present invention can also be used for detection of a misfire attributed to a change in the fuel property (e.g., the cetane number of the fuel).

## Brief Description of Drawings

[FIG. 1] A diagram showing a schematic structure of an engine related to an embodiment.
[FIG. 2] A diagram showing a graph comparing strengths of frequencies F1 to F4, when the fuel injection amount of one cylinder out of four cylinders is different from the fuel injection amounts of the other three cylinders.
[FIG. 3] A diagram showing a graph comparing strengths of frequencies F1 to F4, when the fuel injection amounts of two cylinders out of four cylinders, where combustion strokes are not continuous, are different from the fuel injection amounts of the other two cylinders.
[FIG. 4] A diagram showing operating points plotted on a complex plane through fast Fourier transformation, when the fuel injection amount of one cylinder out of four cylinders is different from the fuel injection amounts of the other three cylinders.
[FIG. 5] A diagram showing operating points plotted on a complex plane through fast Fourier transformation, when the fuel injection amounts of two cylinders out of four cylinders, where combustion strokes are continuous, are different from the fuel injection amounts of the other two cylinders.
[FIG. 6] A diagram showing operating points plotted on a complex plane through fast Fourier transformation, when the fuel injection amounts of two cylinders out of four cylinders, where combustion strokes are not continuous, are different from the fuel injection amounts of the other two cylinders.
[FIG. 7] A diagram showing an exemplary total fuel injection amount calculation map.
[FIG. 8] A flowchart showing the steps of a diagnosis operation and a correction operation of a total fuel injection amount.
[FIG. 9] A flowchart showing steps of an unevenness diagnosis operation and an unevenness cancelling operation for fuel injection amount of each injector.
[Fig. 10] A diagram showing a complex plane for explaining a work base vector.
[FIG. 11] A diagram showing a complex plane for explaining a technique in a diagnosis method 1.
[FIG. 12] A diagram showing an example relationship between a scalar amount L based on the coefficient a and a deviation amount $\Delta Q$ of the fuel injection amount.
[FIG. 13] A diagram representing a complex plane of F1 for explaining a technique in a diagnosis method 2.

[FIG. 14] A diagram showing a complex plane of F2 for explaining a technique in a diagnosis method 2.
[FIG. 15] A table showing data of transition of the vector angle and the scalar amount on a complex plane, with a change in the correction amount of the fuel injection amount.
[FIG. 16] A diagram showing an example relationship between an EGR rate and the strength of F4.
[FIG. 17] A flowchart showing steps of control of Modification 2.
[FIG. 18] A schematic view showing the gas amount, the gas pressure, and the gas temperature of each part of an intake/exhaust system of the engine.
[FIG. 19] A schematic view showing the cross-sectional area, the gas pressure, and the gas temperature of a gas passage around a wastegate valve.
[FIG. 20] A diagram for explaining a change in the area of an exhaust gas passage around the wastegate valve, which is associated with a change in the fuel injection amount.
[FIG. 21] A diagram showing a schematic structure around a turbocharger of an engine related to Modification 4.

Description of Embodiments

The following describes an embodiment of the present invention based on the attached drawings. The present embodiment deals with a case where the present invention is applied to a 4 -stroke diesel engine (multi-cylinder internal combustion engine) having four cylinders.

- Schematic Structure of Engine -

FIG. 1 is a diagram showing a schematic structure of an engine 1 related to the present embodiment. This engine 1 is used, for example, in a ship and the like.

As shown in FIG. 1, the engine 1 of the present embodiment includes: an engine body 10, and an air-intake system 20 configured to guide intake air to combustion chambers 11, 11, ... of four cylinders #1, #2, #3, and #4 formed in the engine body 10, and an exhaust system 30 configured to discharge the exhaust gas generated by the combustion chamber 11, 11, ....

The engine body 10 includes a cylinder block 12 and a cylinder head (not shown) and the like, which include the cylinders #1 to #4.

The air-intake system 20 includes an air-intake pipe 21 and an air-intake manifold 22, and guides the outside air to the combustion chambers 11, 11, ... of the cylinders #1 to #4 via the air-intake pipe 21 and the air-intake manifold 22. In the air-intake pipe 21, an air filter 23, a compressor wheel 41 of a turbocharger (exhaust turbocharger) 40, an intercooler 24, a diesel throttle 25, and the like, are provided in this order from the upstream to the downstream of the direction in which the intake air flows.

The exhaust system 30 includes an exhaust pipe 31 and an exhaust manifold 32, and discharges exhaust gas to the atmosphere through the exhaust manifold 32 and exhaust pipe 31. Further, in the exhaust pipe 31, a turbine wheel 42 of the turbocharger 40, an exhaust gas purification device 33, and the like are provided in this order from the upstream to the downstream of the direction in which the exhaust gas flows.

The turbocharger 40 is for forcedly-feeding the intake air into the combustion chambers 11, 11, ... of the cylinders #1 to #4 by utilizing the fluid energy of the exhaust gas. The turbine wheel 42 is rotated by the fluid energy of exhaust gas discharged from the combustion chambers 11, 11, ... of the engine body 10 to the exhaust pipe 31. The compressor wheel 41 is coupled to the turbine wheel 42 via a rotation shaft 43 so as to rotate with the turbine wheel 42.

The engine body 10 is provided with a fuel supply device 50 for supplying fuel to combustion chambers 11, 11, ... of the cylinders #1 to #4. The fuel supply device 50 is a common rail type fuel supply device, and includes: a common rail 51 configured to store fuel of a predetermined pressure; injectors 52, 52, ... provided to the combustion chambers 11, 11, ..., respectively for injecting the fuel stored in the common rail 51 into the combustion chambers 11, 11, ...; a high-pressure fuel pump 53 configured to pressurize the fuel stored in a not-shown fuel tank and to pressure-feed the fuel to the common rail 51.

The air-intake pipe 21 and the exhaust pipe 31 are connected through an exhaust gas recirculation pipe (EGR pipe) 61. The EGR pipe 61 circulates a part of the exhaust gas to the air-intake system 20 and supplies it to the combustion chambers 11, 11, ... so as to lower the combustion temperature, thereby reducing the amount of the NOx generated. The EGR pipe 61 includes: an EGR valve 62 whose opening degree is adjustable through electronic control; and an EGR cooler 63 configured to cool the exhaust gas passing the EGR pipe 61. The EGR pipe 61, the EGR valve 62, the EGR cooler 63, and the like constitute an EGR device (exhaust gas regulation device) 60.

Further, the exhaust pipe 31 is provided with an exhaust bypass pipe 71 for letting the exhaust gas partially bypass the turbine wheel 42 of the turbocharger 40. To this exhaust bypass pipe 71, a wastegate valve 72 is provided. To an actuator 73 of the wastegate valve 72, an intake air pressure inside the air-intake pipe 21 is introduced. According to the intake air pressure introduced, a diaphragm inside the actuator 73 is operated to open or close the wastegate valve 72. When the wastegate valve 72 is opened, part of the exhaust gas flows into the exhaust bypass pipe 71 and bypasses the turbocharger 42 of the turbine wheel 40. This suppresses or reduces an increase in the rotational speed of the turbine wheel 42, and stable turbocharging pressure is obtained.

An engine ECU 100 configured to control the operation of the engine 1 is electrically connected to an output operating member 101, an engine rotational speed sensor (an internal combustion engine rotational speed detection unit) 102, a load state detection member 103, a turbo rotational speed sensor (turbocharger rotational speed detection unit) 104, a coolant temperature sensor 105, an intake air pressure sensor 106, an exhaust pressure sensor 107, an intake air temperature sensor 108, and an atmospheric pressure sensor 109 are electrically connected.

The output operating member 101 is structured by, for example, a manually operable accelerator lever, or an accelerator pedal.

The engine rotational speed sensor 102 is structured by an electromagnetic pickup, and outputs a pulse signal corresponding to the rotational speed of a crankshaft 13 of the engine 1. Specifically, to crankshaft 13, an NE rotor 14 having, on the outer circumference edge thereof, a plurality of alternately-arranged protrusions and recesses are provided in an integrally-rotatable manner. The engine rotational speed sensor 102 is arranged to face the outer circumference of the NE rotor 14. This way, the engine rotational speed sensor 102 is configured to output a pulse signal corresponding to the engine rotational speed when the protrusions pass the vicinity of the engine rotational speed sensor 102.

The load state detection member 103 serves as an accelerator opening degree sensor configured to detect an operation amount (opening degree) of the output operating member 101, and outputs a signal corresponding to a load state of the engine body 10.

The turbo rotational speed sensor 104 is structured by an electromagnetic pickup, and is arranged so as to face blades of the compressor wheel 41. Thus, the turbo rotational speed sensor 104 is configured to output a pulse signal, each time a blade passes the vicinity of the turbo rotational speed sensor 104, through the rotation of the compressor wheel 41. In other words, the turbo rotational speed sensor 104 is configured to output pulse signals according to the rotational speed of the turbocharger 40. The output signals from the turbo rotational speed sensor 104 are transmitted to an F/V converter 110. The F/V converter 110 is configured to convert the pulse signals output from the turbo rotational speed sensor 104 into frequency data, and the frequency data resulting from the conversion is transmitted to the engine ECU 100.

The coolant temperature sensor 105 outputs a signal according to the coolant temperature of the engine 1.

The intake air pressure sensor 106 outputs a signal corresponding to the intake pressure of the downstream side of the air filter 23 in the air-intake pipe 21.

The exhaust pressure sensor 107 outputs a signal corresponding to the exhaust pressure of the downstream side of the turbine wheel 42 in the exhaust pipe 31 and the upstream of the exhaust gas purification device 33.

The intake air temperature sensor 108 outputs a signal corresponding to the intake air temperature of the upstream side of the air filter 23 in the air-intake pipe 21.

The atmospheric pressure sensor 109 outputs a signal corresponding to the atmospheric pressure.

The engine ECU 100 includes a calculation unit (CPU) and a storage unit. The storage unit includes: a ROM for storing a control program, control data, and the like; an EEPROM in which a setting value and the like are stored in such a manner that the setting value and the like stored are rewritable and not lost even when the power supply is turned off; a RAM for temporarily keeping data generated during a calculation by the calculation unit; and the like.

The engine ECU 100 is configured to perform basic control with respect to a fuel supply state of the fuel supply device 50, according to an operation amount of the output operating member 101. Specifically, the engine ECU 100 controls an electromagnetic solenoid or a piezoelectric element provided to each of the injectors 52, 52, ..., so that the injectors 52, 52, ... each perform a predetermined fuel injection according to the operation amount of the output operating member 101 detected by the load state detection member 103. Along with this, the high-pressure fuel pump 53 is controlled to control the fuel pressure of the common rail 51. Further, the engine ECU 100 performs opening degree control of the EGR valve 62 according to the operational state of the engine 1.

Further, as will be described later, the engine ECU 100 diagnoses the fuel combustion state in the combustion chambers 11, 11, ... of cylinders #1 to #4, and performs a correction operation for correcting the fuel injection amount of the injectors 52, 52, ..., according to the diagnosis result. The diagnosis operation of the combustion state and the correction operation of the fuel injection amount will be described later.

- Outline of Combustion State Diagnosis -

Next, the following describes an overview of the combustion state diagnosis, which is a characteristic of the present embodiment.

<Principal of Diagnosing Unevenness in Combustion State>

Fuel combustion state diagnosis of the engine 1 in the present embodiment diagnoses unevenness in the fuel combustion states of the cylinders #1 to #4, through a frequency analysis involving a fast Fourier transformation of the frequency characteristic of signals output from the turbo rotational speed sensor 104 or from the engine rotational speed sensor 102. Therefore, the turbo rotational speed sensor 104 or the engine rotational speed sensor 102 corresponds to a rotational speed detector (a rotational speed detector configured to output a signal corresponding to a rotational speed of the exhaust turbocharger or a signal corelated to fluctuation in the rotational speed of the exhaust turbocharger (a signal corresponding to the engine rotational speed)) of the present invention.

The diagnosis of unevenness in the fuel combustion states of cylinders #1 to #4 is performed by the engine ECU100. Therefore, a functional part of the engine ECU 100 that executes this diagnosis of unevenness in the combustion states corresponds to the fuel combustion state diagnosis unit of the present invention. That is, the engine ECU 100 is an example of the diagnosis device of the present invention.

First, for the sake of easier understanding of a technique of diagnosing unevenness in the combustion states according to the present invention, the following describes the principal of the technique. Further, in the following description, diagnosis of unevenness in the fuel injection amount (a state quantity related to fuel combustion, in the present invention) from the injectors 52, 52, ... is described as an exemplary form of diagnosis of the unevenness in the fuel combustion states of the cylinders #1 to #4.

First, a turbo rotational speed signal, which is frequency data converted from an output signal from the turbo rotational speed sensor 104 by the F/V converter 110, is subjected to an order frequency analysis. By analyzing this, an amount of energy given to the turbine wheel 42 of the turbocharger 40 by the exhaust gas exhausted from the cylinders #1 to #4 is evaluated. This energy is obtained by fuel combustion in the combustion chambers 11, 11, ... of the cylinders #1 to #4.

In cases of engine 1 of the present embodiment, a combustion frequency $f_{cmb}$ is calculated by the following formula (1).

[Formula 1]

$$f_{cmb} = \frac{z \cdot N_t}{2} \quad \cdots (1)$$

In the formula (1), z is the number of cylinders, Nt is the rotational speed of the turbocharger 40, and "2" is a rotation number per cycle of the engine 1.

It should be noted that the rotational speed of the turbocharger 40 varies according to the rotational speed of the engine 1. That is, the rotational speed of the turbocharger 40 rises when the exhaust gas from the combustion chamber 11 during the exhaust stroke of the engine 1 reaches the turbine wheel 42 of the turbocharger 40. The rotational speed of the turbocharger 40 drops during the other period. Therefore, the cycle of fluctuation in the rotational speed of the turbocharger 40 corelates to the rotational speed of the engine 1. Therefore, the combustion frequency $f_{cmb}$ can also be calculated by replacing the rotational speed Nt of the turbocharger 40 in the formula (1) with the rotational speed Ne of the engine 1.

To evaluate various changes associated with fuel combustion, four types of frequencies F1, F2, F3, and F4 are obtained from the following formulas (2) to (5) in which the combustion frequency $f_{cmb}$ calculated in the formula (1) is divided by "4", "2", "1.5", and "1", respectively. That is, the frequency F1 is a frequency obtained by dividing the combustion frequency $f_{cmb}$ by the number of cylinders of the engine 1, whereas the frequency F2 is a frequency obtained by dividing the combustion frequency $f_{cmb}$ by "1/2" of the number of cylinders of the engine 1.

[Formula 2]

$$F1 = f_{cmb}/4 \quad \cdots (2)$$

$$F2 = f_{cmb}/2 \quad \cdots (3)$$

$$F3 = f_{cmb}/1.5 \quad \cdots (4)$$

$$F4 = f_{cmb} \quad \cdots (5)$$

FIG. 2 is a graph showing a comparison among the magnitudes (hereinafter, sometimes referred to as "strength") of frequencies F1 to F4, where the fuel injection amount (fuel injection amount from the injector 52) of only one of the four cylinders is different from the fuel injection amounts of the other three cylinders. A graph of FIG. 2 shows, in the form of a bar graph, the strengths of the frequencies F1 to F4 obtained through an experiment or a simulation.

FIG. 2 shows results of experiments or simulations performed for: three cases where the fuel injection amount of only one of the cylinders is made larger than the fuel injection amounts of the other three cylinders (the fuel injection amounts of the three other cylinders are substantially the same); three cases where the fuel injection amount of only one of the cylinders is made smaller than the fuel injection amounts of the other three cylinders; and a case where the fuel injection amounts of all the cylinders are the same. In the figure, "a", "b", and "c" are each a case where the fuel injection amount of one of the cylinders is made larger than the fuel injection amounts of the other three cylinders, and the deviation amount of the fuel injection amounts among the cylinders (deviation amount of the fuel injection amount of the one cylinder from the fuel injection amounts of the other three cylinders) increases in order of "c", "b", and "a". Further, in the figure, "e", "f', and "g" are each a case where the fuel injection amount of one of the cylinders is made smaller than the fuel injection amounts of the other three cylinders, and the deviation amount of the fuel injection amounts among the cylinders increases in order of "e", "f', and "g". Note that "d" in the figure is a case where the fuel injection amounts of all of the cylinders are the same.

Further, the frequencies F1 to F4, where the fuel injection amounts of two cylinders to successively operate on the combustion stroke are different from the fuel injection amounts of the other two cylinders (the fuel injection amounts of the other two cylinders are substantially the same), are the same as those shown in FIG. 2. For example, when the combustion stroke takes place in the order of the first cylinder #1 → the third cylinder #3 → the second cylinder #2 → the fourth cylinder #4, the fuel injection amounts of the first cylinder #1 and the third cylinder #3 are different from the fuel injection amounts of the second cylinder #2 and the fourth cylinder #4.

As shown in FIG. 2, fluctuation in the rotational speed of the turbocharger 40 will largely appear in F1, in a case where the fuel injection amount in one of the cylinders is different from the fuel injection amounts of the other three cylinders, and in a case where and the fuel injection amount of two cylinders successively operating on the combustion stroke are different from the fuel injection amounts of the other two cylinders. This is because a rotational fluctuation takes place only once in the one cycle of the cylinders #1 to #4. Therefore, the influence of the rotational fluctuation appears significantly in the frequency F1 obtained by dividing the combustion frequency $f_{cmb}$ by "4". More specifically, although fluctuation in the rotational speed of the turbocharger 40 will appear in F1 and F2, in a case where the fuel injection amount in one of the cylinders is different from the fuel injection amounts of the other three cylinders, and in a case where and the fuel injection amount of two cylinders successively operating on the combustion stroke are different from the fuel injection amounts of the other two cylinders, the magnitude (strength) of F1 is significantly larger than the magnitude of F2.

Meanwhile, FIG. 3 shows a graph comparing strengths of frequencies F1 to F4, when the fuel injection amounts of two cylinders out of four cylinders, where combustion strokes are not continuous, are different from the fuel injection amounts of the other two cylinders. For example, when the combustion stroke takes place in the order of the first cylinder #1 → the third cylinder #3 → the second cylinder #2 → the fourth cylinder #4, the fuel injection amounts of the first cylinder #1 and the second cylinder #2 are different from the fuel injection amounts of the third cylinder #3 and the fourth cylinder #4. The graph of FIG. 3 also shows, in the form of a bar graph, the strengths of the frequencies F1 to F4 obtained through an experiment or a simulation.

FIG. 3 shows results of experiments or simulations performed for: three cases where the fuel injection amounts of two cylinders not successively operating on the combustion stroke are made larger than the fuel injection amounts of the other two cylinders (the fuel injection amounts of the other two cylinders are substantially the same); three cases where the fuel injection amounts of two cylinders not successively operating on the combustion stroke are made smaller than the fuel injection amounts of the other two cylinders; and a case where the fuel injection amounts of all the cylinders are the same. In the figure, "a", "b", and "c" are each a case where the fuel injection amounts of two cylinders not successively operating on the combustion stroke is made larger than the fuel injection amounts of the other two cylinders, and the deviation amount of the fuel injection amounts among the cylinders (deviation amount of the fuel injection amounts of the two cylinders not successively operating on the combustion stroke from the fuel injection amounts of the other two cylinders) increases in order of "c", "b", and "a". Further, in the figure, "e", "f', and "g" are each a case where the fuel injection amounts of two cylinders not successively operating on the combustion stroke are made smaller than the fuel injection amounts of the other two cylinders, and the deviation amount of the fuel injection amounts among the cylinders increases in order of "e", "f', and "g". Note that "d" in the figure is a case where the fuel injection amounts of all of the cylinders are the same.

As shown in FIG. 3, fluctuation in the rotational speed of the turbocharger 40 will be more significant in F2 than F1, in a case where the fuel injection amounts in two cylinders not successively operating on the combustion stroke are different from the fuel injection amounts of the other two cylinders. This is because a rotational fluctuation takes place twice in the one cycle of the cylinders #1 to #4. Therefore, the influence of the rotational fluctuation appears significantly in the frequency F2 obtained by dividing the combustion frequency $f_{cmb}$ by "2".

When the frequency characteristics obtained as described above are expanded into the Fourier series and their characteristics are plotted on the complex plane, there will be an operating point unique to each of the above described cases (i.e., a case where the fuel injection amount in one of the cylinders is different from the fuel injection amounts in the other three cylinders; a case where the fuel injection amounts in two cylinders successively operating on the combustion stroke is different from the fuel injection amounts in the other two cylinders; and a case where the fuel injection amounts in two cylinders not successively operating on the combustion stroke are different from the fuel injection amounts in the other two cylinders).

FIG. 4 shows the frequency characteristic of frequency F1 expanded into a Fourier series and operating points plotted on a complex plane. In a case where the fuel injection amounts in all of the cylinders are the same, the operating point is positioned at the origin of the complex plane (see "•" in FIG. 4).

On the other hand, in a case where the fuel injection amount in one of the cylinders is different from the fuel injection amounts in the other three cylinders, the operating point is not positioned at the origin of the complex plane, and is in a position corresponding to the cylinder with deviation in the fuel injection amount, and corresponding to the deviation amount.

The "○" in FIG. 4 is the operating point of a case where the fuel injection amount of only one of the cylinders is different from the fuel injection amounts of the other three cylinders, and is the operating point of a case where the fuel injection amount of the first cylinder #1 is smaller than the fuel injection amount of the other three cylinders. Further, the distance L of this operating point from the origin indicates the deviation amount in the fuel injection amount (the deviation amount in the fuel injection amount of the first cylinder #1 from the fuel injection amounts of the other three cylinders). It should be noted that the similar operating point also occurs in a case when the fuel injection amount of the fourth cylinder #4 is larger than the fuel injection amounts of the other three cylinders. For the sake of easier understanding of the technology of the present invention, the following describes an example where a fuel injection amount of a specific cylinder is less than the fuel injection amounts of the other cylinders.

As shown in FIG. 4, in a case where the fuel injection amount of the third cylinder #3 is larger than the fuel injection amount of the other three cylinders, or where the fuel injection amount of the second cylinder #2 is smaller than the fuel injection amount of the other three cylinders, the operating point occurs on an operation line presented as a broken line in the first quadrant of the complex plane. Further, in a case where the fuel injection amount of the first cylinder #1 is larger than the fuel injection amount of the other three cylinders, or where the fuel injection amount of the fourth cylinder #4 is smaller than the fuel injection amount of the other three cylinders, the operating point occurs on an operation line presented as a broken line in the second quadrant of the complex plane. Further, in a case where the fuel injection amount of the second cylinder #2 is larger than the fuel injection amount of the other three cylinders, or where the fuel injection amount of the third cylinder #3 is smaller than the fuel injection amount of the other three cylinders, the operating point occurs on an operation line presented as a broken line in the third quadrant of the complex plane. Further, as indicated by the "○" of FIG. 4, in a case where the fuel injection amount of the fourth cylinder #4 is larger than the fuel injection amount of the other three cylinders, or where the fuel injection amount of the first cylinder #1 is smaller than the fuel injection amount of the other three cylinders, the operating point occurs on an operation line presented as a broken line in the fourth quadrant of the complex plane. Therefore, the quadrant where the operating point occurs is specified by the angle (angle $\beta$ of FIG. 4) of the vector ranging from the origin to the operating point with respect to the coordinate axis of the complex plane (e.g., the coordinate axis of the real part). Based on this angle $\beta$, the cylinders in which deviation in the fuel injection amount may be taking place (cylinders that could be the one cylinder whose injection amount is different from the injection amounts of the other three cylinders) can be narrowed to some extent (narrowed down to two cylinders). Further, the deviation amount in the injection amount (the deviation amount in the fuel injection amount of the one cylinder from those of the other three cylinders) can be obtained by the length of this vector (the length L in FIG. 4). That is, based on an angle formed by the vector with respect to the coordinate axis of the complex plane, a cylinder whose fuel combustion state is different from the other cylinders can be specified, and a deviation in a state quantity related to fuel combustion in the specified cylinder (fuel injection amount in the present embodiment) from state quantities of the other cylinders (injection amounts) can be specified based on the length of the vector (a function of the fuel combustion state diagnosis unit in the present invention).

It should be noted that the angle $\beta$ varies depending on the engine rotational speed. For this reason, to properly obtain the relation between the position in the quadrant in which the operating point occurs and the cylinder with deviation in the fuel injection amount, it is preferable to obtain in advance an angle correction amount according to the engine rotational speed through an experiment and the like, and to correct the orientation of the vector (tilt of each operation line) by the angle correction amount. For example, in the present embodiment, the direction of the vector shifts in the clockwise direction in FIG. 4 as the engine rotational speed becomes higher.

FIG. 5 shows a case where the fuel injection amounts in two cylinders successively operating on the combustion stroke are different from the fuel injection amounts in the other two cylinders. The "□" indicates the operating point of a case where the fuel injection amounts of the first cylinder #1 and the third cylinder #3 are different from the fuel injection amounts of the other two cylinders, and is the operating point of a case where the fuel injection amounts of the first cylinder #1 and the fuel injection amount of the third cylinder #3 are substantially the same (the decrease amount in the fuel injection amount in the first cylinder #1 and the decrease amount in the fuel injection amount in the third cylinder #3 are substantially the same). In this case, the operating point "□" is not positioned on any of the operation lines. Therefore, the vector from the origin to the working point "□" is decomposed into a vector of the third quadrant side (a vector of the operation line of the third quadrant, which ranges from the origin to the operating point "◇"), and a vector of the fourth quadrant side (a vector of the operation line of the quadrant, which ranges from the origin to the operating point "o"). The vector decomposed into the third quadrant side indicates that the fuel injection amount of the third cylinder #3 is less than the fuel injection amounts of the second cylinder #2 and the fourth cylinder #4. The length of this vector corresponds to the deviation amount of the fuel injection amount of the second cylinder #3 from the fuel injection amounts of the cylinder #2 and the fourth cylinder #4. Similarly, the vector decomposed into the fourth quadrant side indicates that the fuel injection amount of the first cylinder #1 is less than the fuel injection amounts of the second cylinder #2 and the fourth cylinder #4. The length of this vector corresponds to the deviation amount of the fuel injection amount of the first cylinder #1 from the fuel injection amounts of the cylinder #2 and the fourth cylinder #4.

That is, the angle $\beta 1$ in FIG. 5 indicates that the fuel injection amount of the third cylinder #3 is less than the fuel injection amounts of the second cylinder #2 and the fourth cylinder #4. The angle $\beta 2$ indicates that the fuel injection amount of the first cylinder #1 is less than the fuel injection amounts of the second cylinder #2 and the fourth cylinder #4. Since the decrease amount in the fuel injection amount in the first cylinder #1 and the decrease amount in the fuel injection amount in the third cylinder #3 are substantially the same, the angle $\beta$ of the vector from the origin to the operating point "□" is at an intermediate angle of the angles $\beta 1$ and $\beta 2$. Therefore, if the fuel injection amount of the third cylinder #3 and the fuel injection amount of the first cylinder #1 are different from each other, the angle $\beta$ of the vector from the origin to the operating point "□" is different accordingly.

The operating point "Δ" in FIG. 5 represents a case where the ratio of the decrease amount in the fuel injection amount of the first cylinder #1 (the deviation amount with respect to the fuel injection amounts of the second cylinder #2 and the fourth cylinder #4) to the decrease amount in the fuel injection amount of the third cylinder #3 (similarly, the deviation amount with respect to the fuel injection amounts of the second cylinder #2 and the fourth cylinder #4) is 2:3. The angle of the vector from the origin to the operating point "Δ" corresponds to this ratio. By decomposing this vector into vectors of the operation lines, the deviation amounts of the first cylinder #1 and the third cylinder #3 (the deviation amounts from the fuel injection amounts of the second cylinder #2 and the fourth cylinder #4) can be calculated.

Similarly, the operating point "▲" in FIG. 5 represents a case where the ratio of the decrease amount in the fuel injection amount of the first cylinder #1 to the decrease amount in the fuel injection amount of the third cylinder #3 is 5:2. The angle of the vector from the origin to the operating point "▲" corresponds to this ratio. As in the above case, by decomposing this vector into vectors of the operation lines, the deviation amounts of the first cylinder #1 and the third cylinder #3 (the deviation amounts from the fuel injection amounts of the second cylinder #2 and the fourth cylinder #4) can be calculated.

As described, in a case where the fuel injection amounts of two cylinders successively operating on the combustion stroke are different from the fuel injection amounts of the other two cylinders, an operation angle $\beta$ in the complex plane of F1 represents the ratio of the fuel injection amounts of both cylinders, and the length of the vector represents the deviation amount in the injection amounts.

FIG. 6 shows a case where the fuel injection amounts in two cylinders not successively operating on the combustion stroke are different from the fuel injection amounts in the other two cylinders. The operating point "Δ" indicates the operating point of a case where the fuel injection amount of the first cylinder #1 is different from the fuel injection amounts of the second cylinder #2 and the third cylinder #3, and the fuel injection amount of the fourth cylinder #4 is different from the fuel injection amount of the second cylinder #2 and the third cylinder #3. In this case the length of the vector from the origin to the operating point "Δ" corresponds to a deviation of the fuel injection amount in the first cylinder #1 from the fuel injection amount in the fourth cylinder #4. Specifically, in a case where the fuel injection amount of the first cylinder #1 and the fuel injection amount of the fourth cylinder #4 are both less than the fuel injection amounts of the second cylinder #2 and the third cylinder #3, and if the fuel injection amount of the first cylinder #1 is less than the fuel injection amount of the fourth cylinder #4 (the decrease amount in the fuel injection amount in the first cylinder #1 is large), the operating point occurs in the fourth quadrant (see operating point "Δ"). Further, the position of the operating point is different on the operation line due to deviation in the fuel injection amount of the first cylinder #1 from the fuel injection amount of the fourth cylinder #4. Meanwhile, in a case where the fuel injection amount of the first cylinder #1 and the fuel injection amount of the fourth cylinder #4 are both less than the fuel injection amounts of the second cylinder #2 and the third cylinder #3, and if the fuel injection amount of the fourth cylinder #4 is less than the fuel injection amount of the first cylinder #1 (the decrease amount in the fuel injection amount in the fourth cylinder #4 is large), the operating point occurs in the second quadrant (see operating point "□"). Further, the position of the operating point is different on the operation line due to deviation in the fuel injection amount of the first cylinder #1 from the fuel injection amount of the fourth cylinder #4.

In other words, the angle β (angle from the coordinate axis of the real part) of the vector from the origin to the operating point "Δ" in FIG. 6 indicates that the fuel injection amount of the first cylinder #1 is different from the fuel injection amounts of the second cylinder #2 and the third cylinder #3 and that the fuel injection amount of the fourth cylinder #4 is different from the fuel injection amounts of the second cylinder #2 and the third cylinder #3. The length of the vector represents the deviation of the fuel injection amount of the first cylinder #1 from the fuel injection amount of the fourth cylinder #4. The operating point "Δ" in FIG. 6 represents a case where the ratio of the decrease amount in the fuel injection amount of the first cylinder #1 to the decrease amount in the fuel injection amount of the fourth cylinder #4 is 5:1.

Further, the operating point "□" in FIG. 6 represents a case where the ratio of the decrease amount in the fuel injection amount of the first cylinder #1 to the decrease amount in the fuel injection amount of the fourth cylinder #4 is 3:5.

As described, in a case where the fuel injection amounts of two cylinders not successively operating on the combustion stroke are different from the fuel injection amounts of the other two cylinders, an operation angle β in the complex plane specifies the cylinder, and the length of the vector represents the deviation amount in the injection amount in the cylinder.

It should be noted that in a case where the operating point is on the operation line as described, the position of the operating point alone does not determine whether the fuel injection amount of one of the cylinders is different from the fuel injection amounts of the other three cylinders (see FIG. 4) or the fuel injection amounts of two cylinders not successively operating on the combustion stroke are different from the fuel injection amounts of the other two cylinders (see FIG. 6). However, in these two cases, the relationship in the magnitudes of the frequencies F1 F2 are reversed as shown in FIG. 2 and FIG. 3. In other words, F1 is larger than F2 in a case where the fuel injection amount of only one of the cylinders is different from the fuel injection amounts of the other three cylinders. To the contrary, F2 is larger than F1 in a case where the fuel injection amounts of two cylinders not successively operating on the combustion stroke are different from the fuel injection amounts of the other two cylinders. As described, the above determination (determination of whether the fuel injection amount of one of the cylinders is different from the fuel injection amounts of the other three cylinders or the fuel injection amounts of two cylinders not successively operating on the combustion stroke are different from the fuel injection amounts of the other two cylinders) is possible based on the position of the operating point and by comparing the magnitudes of the frequencies F1 and F2.

Since the present embodiment deals with an example of a four-cylinder engine, the two cylinders not successively operating on the combustion stroke are those whose pistons reciprocate in the same phase, but their combustion strokes have a phase difference of 360° in crank angle. The similar applies to other engines with a different number of cylinders (e.g., six cylinders), and a "plurality of cylinders not successively operating on the combustion stroke" in the present invention means the pistons of these cylinders reciprocate in the same phase and their combustion strokes are different from each other in crank angle. In a six-cylinder engine for example where the combustion stroke takes place in order of a first cylinder #1 → a fifth cylinder #5 → a third cylinder #3 → a sixth cylinder #6 → a second cylinder #2 → a fourth cylinder #4, two cylinders not successively operating on the combustion stroke are, for example, the first cylinder #1 and the sixth cylinder #6.

<Principle of Diagnosis of Total Fuel Injection Amount>

In addition to diagnosis of unevenness in the fuel injection amounts of cylinders #1 to #4 as hereinabove described, the combustion state diagnosis of the present embodiment also diagnoses a total injection amount of fuel injected from the injectors 52, 52, ... of cylinders #1 to #4 in a single cycle (hereinafter, total fuel injection amount). The principal of this diagnosis of the total fuel injection amount is described hereinbelow.

Since the frequency F4 matches with the combustion frequency $F_{cmb}$, there is a strong correlation with the total fuel injection amount. Therefore, the total fuel injection amount can be obtained based on this frequency F4.

The total fuel injection amount is obtained according to a map (fuel injection amount calculation map) shown in FIG. 7. This total fuel injection amount calculation map is for determining a total fuel injection amount $Q_{all}$, using the intensity of the frequency F4 and the engine rotational speed as parameters. Even with the same engine rotational speed, the value of the total fuel injection amount $Q_{all}$ increases with an increase in the strength of the frequency F4. Further, even with the same frequency F4, the value of the total fuel injection amount $Q_{all}$ increases with a decrease in the engine rotational speed. This map is created in advance through an experiment or a simulation, and is stored in the ROM of the engine ECU 100.

As should be understood from this, the total fuel injection amount is diagnosed by the engine ECU 100. Therefore, a functional part of the engine ECU 100 that executes the diagnosis of the total fuel injection amount (diagnosis of the fuel combustion state in each cylinder based on the total fuel injection amount) corresponds to a fuel combustion state diagnosis unit of the present invention (a fuel combustion state diagnosis unit configured to diagnose a fuel combustion state of each cylinder by calculating a total fuel feed rate to the cylinders within a single cycle of the internal combustion engine, using a frequency characteristic of a signal output from the turbocharger rotational speed detection unit and an engine rotational speed calculated based on a signal output from the internal combustion engine rotational speed detection unit, as parameters).

This is the overview of the combustion state diagnosis related to the present embodiment.

- Combustion State Diagnosis -

Next, the following describes steps of actually diagnosing the combustion state using the above-described principal of technique for diagnosing, and correcting the fuel injection amount according to the result of the diagnosis.

<Diagnosis Operation and Correction Operation of Total Fuel Injection Amount>

First, the following describes the steps of the diagnosis operation and the correction operation of a total fuel injection amount, with reference to the flowchart of FIG. 8. This flowchart is repeated every predetermined period after the start switch of the engine 1 is turned on.

First, in step ST 1, an instantaneous rotational speed of the turbocharger 40 is obtained. Specifically, a signal (sine wave or rectangular wave) output from the turbo rotational speed sensor 104 is subjected to frequency conversion by the F/V converter 110, thereby obtaining an instantaneous rotational speed of the turbocharger 40.

Then, in step ST 2, the frequency F4 calculated by the above formula (5) is obtained.

After the frequency F4 is obtained, the total fuel injection amount $Q_{all}$ is calculated by using the total fuel injection amount calculation map of FIG. 7, in step ST 3. Specifically, the information of the instantaneous rotational speed of the turbocharger 40 is transmitted to the engine ECU 100, and the total fuel injection amount $Q_{all}$ is calculated based on F4 data out of frequency analysis data, by using the total fuel injection amount calculation map.

Next, based on the total fuel injection amount Q all, the fuel injection amount (average fuel injection amount) $Q_{ave}$ from the injectors 52, 52, ..., assuming that even amount of fuel is injected in the cylinders #1 to #4, is calculated in the step ST4, using the formula (6) below.

[Formula 3]

$$Q_{ave} = \frac{Q_{all}}{z} \quad \cdots (6)$$

Then, in step ST5, a deviation amount $\Delta Q_{tgt}$ in the fuel injection amount is calculated. The engine ECU 100 calculates a target injection amount $Q_{tgt}$ as the fuel injection amount from the injectors 52, 52, ..., according to an operation amount of the output operating member 101. In this step ST5, the target injection amount $Q_{tgt}$ is subtracted from the average fuel injection amount $Q_{ave}$ calculated with the formula (6), to calculate the deviation amount $\Delta Q_{tgt}$ between both the target injection amount $Q_{tgt}$ and the average fuel injection amount $Q_{ave}$ (Formula (7)).

[Formula 4]

$$\Delta Q_{tgt} = Q_{ave} - Q_{tgt} \quad \cdots (7)$$

In the step ST6, whether or not the absolute value of the deviation amount $\Delta Q_{tgt}$ has exceeded a predetermined threshold value $Q_{th}$ is determined. This threshold value $Q_{th}$ is a value for determining whether or not there is an abnormality in the fuel supply device 50; e.g., the fuel injection amount from the injector 52 is excessively small, and is set in advance through an experiment or a simulation.

If the absolute value of the deviation amount $\Delta Q_{tgt}$ exceeds the threshold value $Q_{th}$ and the step ST6 results in YES, the process proceeds to the step ST7 to warn the user a misfire is taking place due to an abnormality in the fuel supply device 50 or due to a significant change in fuel property. For example, a warning is displayed on a not-shown operation panel or an audio warning is issued. Further, information of the abnormality is written into the RAM of the engine ECU 100.

On the other hand, if the absolute value of the deviation amount $\Delta Q_{tgt}$ does not exceed the threshold value $Q_{th}$ and the step ST6 results in NO, the process proceeds to the step ST8 to correct the fuel injection amount of each of the injectors 52, 52, .... That is, if the deviation amount $\Delta Q_{tgt}$ is a positive value, the fuel injection amounts from the injectors 52, 52, ... of the cylinders #1 to #4 are reduced by the amount of deviation $\Delta Q_{tgt}$. On the other hand, if the deviation amount $\Delta Q_{tgt}$ is a negative value, the fuel injection amounts from the injectors 52, 52, ... of the cylinders #1 to #4 are increased by the amount of deviation $\Delta Q_{tgt}$. These corrections of the fuel injection amount are done by, for example, changing the valve-open period of the injectors 52, 52, ... (extending the valve-open period by an increase correction amount for a correction by increasing, and shortening the valve-open period by a decrease correction amount for a correction by decreasing).

When the fuel injection amounts of the injectors 52, 52, ... are corrected as described above, the fuel injection amounts of the cylinders #1 to #4 are converged to $Q_{tgt\#cor}$ in the following formula (8).

[Formula 5]

$$Q_{tgt_cor} = Q_{ave} - \Delta Q_{tgt} \quad \cdots (8)$$

By repeating the above operations, the total fuel injection amount $Q_{all}$ is converged to the total fuel injection amount for obtaining the output required by the engine 1 (the target fuel injection amount resulting from the multiplication of the target injection amount $Q_{tgt}$ by the number of cylinders).

Since the correction operation of the total fuel injection amount as described is performed, the steps ST4 to ST8 corresponds to an operation by the fuel feed rate correction unit of the present invention (an operation of obtaining an average fuel feed rate by dividing, by the number of cylinders, a total fuel feed rate in the cylinders within a single cycle of the multi-cylinder internal combustion engine, and correcting the fuel feed rate of each cylinder by an amount of deviation between the average fuel feed rate and a target fuel feed rate of each cylinder determined according to a required output).

It should be noted that the diagnosis operation and the correction operation of the total fuel injection amount $Q_{all}$ are preferably performed when the engine load reaches an upper limit value. This is because, when the total fuel injection amount $Q_{all}$ is corrected in a partial load range, the speed governing the performance of the engine 1 may be deteriorated.

Thus, the diagnosis operation and the correction operation of the total fuel injection amount are described.

<Diagnosis Operation and Cancelling Operation of Unevenness in Fuel Injection Amounts>

Next, the following describes steps of an unevenness diagnosis operation and an unevenness cancelling operation for fuel injection amounts of the injectors 52, 52, ..., with reference to the flowchart of FIG. 9. This flowchart is repeated every predetermined period after the start switch of the engine 1 is turned on.

First, in the step ST11, an instantaneous rotational speed of the turbocharger 40 is obtained as in the step ST1 shown in the flowchart of FIG. 8.

Then, the process proceeds to the step ST12 to obtain frequencies F1 and F2 calculated by the above formulas (2) and (3), respectively.

After the frequencies F1 and F2 are obtained, the process proceeds to the step ST13 to determine whether or not the fuel injection amounts of the injectors 52, 52, ... are substantially even. Specifically, this operation determines whether or not the strengths of the frequencies F1 and F2 are both substantially "0". The strengths of the frequencies F1, F2 are both substantially "0" (see FIG. 2 and FIG. 3), if the fuel injection amounts of all of the injectors 52, 52, ... are even, as hereinabove described. Therefore, whether the fuel injection amounts of the injectors 52, 52, ... are substantially even can be determined by recognizing these strengths.

In an alternative method of the above determination, the frequency characteristics of the frequencies F1, F2 may be expanded to a Fourier series, and whether the operating points plotted on the complex plane are positioned at the origin of the complex plane may be determined. If the fuel injection amounts of all of the injectors 52, 52, ... are substantially even, the operation points are positioned at the origin of the complex plane as described above. Therefore, whether the fuel injection amounts of the injectors 52, 52, ... are substantially even can be determined by recognizing whether or not the operating points are positioned in the origin of the complex plane.

If the fuel injection amounts of the injectors 52, 52, ... are determined as to be even the step ST13 results in YES, the process is returned assuming that the correction operation for canceling the unevenness in the fuel injection amounts is not necessary.

On the other hand, if the fuel injection amounts of the injectors 52, 52, ... are determined as not to be substantially even and the step ST13 results in NO, the process proceeds to the step ST14, and the strengths of the frequencies F1 and F2 are compared. Specifically, whether the strength of the frequency F1 is higher than the frequency F2 is determined. This is for determining whether the situation is "the fuel injection amount of one of the cylinders is different from the fuel injection amounts of the other three cylinders, or the fuel injection amounts of two cylinders successively operating on the combustion stroke are different from the fuel injection amounts of the other two cylinders" or "the fuel injection amounts of two cylinders not successively operating on the combustion stroke are different from the fuel injection amounts of the other two cylinders". As hereinabove described, fluctuation in the rotational speed of the turbocharger 40 will appear in F1, and the magnitude of F1 is significantly larger than F2, in a case where the fuel injection amount in one of the cylinders is different from the fuel injection amounts of the other three cylinders, or in a case where the fuel injection amounts of two cylinders successively operating on the combustion stroke are different from the fuel injection amounts of the other two cylinders. On the other hand, fluctuation in the rotational speed of the turbocharger 40 will be more significant in F2 than F1, in a case where the fuel injection amounts in two cylinders not successively operating on the combustion stroke are different from the fuel injection amounts of the other two cylinders.

Therefore, if the strength of the frequency F1 is higher than the strength of the frequency F2 and the step ST14 results in YES, it can be determined that the fuel injection amount of one of the cylinders is different from the fuel injection amounts of the other three cylinders, or that the fuel injection amounts of two cylinders successively operating on the combustion stroke are different from the fuel injection amounts of the other two cylinders. On the other hand, if the strength of the frequency F2 is higher than the strength of the frequency F1 and the step ST14 results in NO, it is determined that the fuel injection amounts two cylinders not successively operating on the combustion stroke are different from the fuel injection amounts of the other two cylinders.

If the step ST14 results in YES, the process proceeds to the step ST15, and unevenness in the fuel injection amounts of the injectors 52, 52, ... is diagnosed by a later-described diagnosis method 1. This diagnosis method 1 will be specifically described later. On the other hand, if the step ST14 results in NO, the process proceeds to the step ST16, and unevenness in the fuel injection amounts of the injectors 52, 52, ... is diagnosed by a later-described diagnosis method 2. This diagnosis method 2 will be also specifically described later.

Each of the diagnosis methods is specifically described hereinbelow.

In either one of the diagnosis methods, a work base vector at a time of changing a fuel injection amount of each of the cylinders #1 to #4 with respect to the engine rotational speed is obtained in advance through an experiment or an analysis. The work base vector is a vector on the complex plane, which indicates in the form of vector angle and vector length the cylinder in which the fuel injection amount is changed and the amount of change in the fuel injection amount, when the fuel injection amount from the injector 52 of a cylinder is varied by a unit injection amount set in advance. FIG. 10 shows a work base vector $v\rightarrow_{ref\#i}$ in a case where the fuel injection amount of the second cylinder #2 is reduced by a unit injection amount. That is, the work base vector $V\rightarrow_{ref\#i}$ is a vector ranging from the origin and the operating point on a polar coordinates, when the fuel injection amount in an i-th cylinder (the second cylinder #2 in FIG. 10, for example) is changed, which is organized in a per unit injection amount. When the actual operating point is "•" in FIG. 10, a vector resulting from the multiplication of the length of the work base vector $v\rightarrow_{ref\#i}$ by $L_i$ is the vector indicating this operating point "•" (a vector ranging from the origin of the operation to the operation point "•"). That is, the fuel injection amount is deviated in the i-th cylinder, by the fuel injection amount which is $L_i$ times the unit injection amount.

The diagnosis method 1 is specifically described hereinbelow. As hereinabove described, the diagnosis method 1 is executed when the strength of the frequency F1 is higher than the strength of the frequency F2, and when it is determined that the fuel injection amount of one of the cylinders is different from the fuel injection amounts of the other three cylinders, or that the fuel injection amounts of two cylinders successively operating on the combustion stroke are different from the fuel injection amounts of the other two cylinders.

In the diagnosis method 1, the frequency F1 component is first extracted, and an actually measured operating point (hereinafter, also referred to as a measured operating point) is plotted on a complex plane. FIG. 11 shows the measured operating point plotted at coordinates ($\beta_{act}$, $L_{act}$).

Then, a measured operation point vector $V\rightarrow_{act}$ from the origin of the complex plane to the measured operating point ($\beta_{act}$, $L_{act}$) is obtained, and the measured operation point vector $V\rightarrow_{act}$ is decomposed on operation lines sandwiching the measured operation point vector $V\rightarrow_{act}$. That is, the vector is decomposed in to operating point vectors $V\rightarrow_{act\#i}$, $V\rightarrow_{act\#j}$ for two cylinders i and j. A scalar amount of vectors $V\rightarrow_{act\#i}$, $V\rightarrow_{act\#j}$ in two directions thud obtained by the decomposition is determined, and deviations $\Delta Q_i$, $\Delta Q_j$ in the fuel injection amounts of the cylinders i and j (deviation from fuel injection amounts of the other cylinders) are obtained using a correlation equation obtained in advance.

It should be noted that, among the operating point vector $V\rightarrow_{act\#i}$ for the cylinder i, the work base vector $V\rightarrow_{ref\#i}$, and the scalar amount $L_i$, there is a relationship of the following formula (9), and the scalar amount $L_i$ can be calculated from this formula (9).

[Formula 6]

$$\vec{V}_{act_i} = L_i \cdot \vec{V}_{ref_i} \quad \cdots (9)$$

The following specifically describes the technique of the diagnosis method 1 with reference to FIG. 11.

When the measured operating point vector is the measured operation point vector $V\rightarrow_{act}$ as shown in FIG. 11, this measured operation point vector $V\rightarrow_{act}$ is decomposed into operating point vectors $V\rightarrow_{act\#i}$ and $V\rightarrow_{act\#i}$ for the cylinders i and j, and the scalar amounts (the scalar amounts before correction) of the vectors $V\rightarrow_{act\#i}$ and the $V\rightarrow_{act\#i}$ are calculated by the formulas (10) and (11). Here, $L_{react\#i}$ is the scalar amount corresponding to a deviation amount of the fuel injection amount in the i-th cylinder. Further, $L_{react\#j}$ is the scalar amount corresponding to a deviation amount of the fuel injection amount in the j-th cylinder. Further, $\beta_{ref\#i}$ is an angle of the operating point vector $V\rightarrow_{act\#i}$ from the coordinate axis of the real part. $\beta_{ref\#j}$ is an angle of the operating point vector $V\rightarrow_{act\#j}$ from the coordinate axis of the real part.

[Formula 7]

$$L_{act_i} = L_{act} \cdot \cos\left(\beta_{act} - \beta_{ref_i}\right) \quad \cdots (10)$$

$$L_{act_j} = L_{act} \cdot \sin\left(\beta_{act} - \beta_{ref_i}\right) \quad \cdots (11)$$

By correcting the deviation amounts in the fuel injection amounts by the following formulas (12) and (13), a deviation amount $\Delta Q_i$ in the fuel injection amount of the i-th cylinder and a deviation amount $\Delta Q_j$ in the fuel injection amount of the j-th cylinder is calculated.

[Formula 8]

$$\Delta Q_i = a \cdot L_{act_i} \quad \cdots (12)$$

$$\Delta Q_j = a \cdot L_{act_j} \quad \cdots (13)$$

The coefficient a in each of the formulas (12) and (13) is determined in advance through an experiment or a simulation, and defines a relationship between, for example, the scalar amount L shown in FIG. 12 and the deviation amount $\Delta Q$ in the actual fuel injection amount.

It should be noted that a deviation amount calculation map created in advance may be used to extract the deviation amount $\Delta Q_i$ and $\Delta Q_j$ in the fuel injection amounts, instead of calculating the above-described formulas to calculate those deviation amounts. Further, the coefficient a may be the same value for all of the cylinders, or may be set for each of the cylinders, according to an experiment or a simulation.

Next, the diagnosis method 2 is specifically described hereinbelow. As hereinabove described, the diagnosis method 2 is executed in a case where the strength of the frequency F2 is higher than the strength of the frequency F1, and it is determined that the fuel injection amounts two cylinders not successively operating on the combustion stroke are different from the fuel injection amounts of the other two cylinders.

In the diagnosis method 2, the frequency F1 component is first extracted, and a measured operating point is plotted on a complex plane. FIG. 13 shows the operating point plotted at coordinates ($\beta_{act}$, $L_{act}$).

From the operating point on the complex plane of F1, two target cylinders are specified. That is, two cylinders are specified based on the quadrant on a complex plane where the operating point occurs. Then, the fuel injection amount in any of the cylinders is increased or reduced (in FIG. 13, the vector indicated by the one dot chain line $V\rightarrow 1$ shows a case where the fuel injection amount is decreased in the i-th cylinder (the second cylinder #2), and the vector indicated by the one dot chain line $V\rightarrow 2$ shows a case where the fuel injection amount is increased in the i-th cylinder (the second cylinder #2)) so that the F1 component becomes "0". In other words, the operating point is positioned in the origin of the complex plane. In this case, the deviation amount in the fuel injection amounts of the two cylinders matches with each other.

Then, on the complex plane of F2, the deviation amounts of the two cylinders (where the fuel injection amount in the two cylinders are the same, the deviation amounts of these fuel injection amounts from the fuel injection amounts of the other two cylinders) are calculated based on the relationship between the operating points and the deviation amounts in the fuel injection amounts. Then, the deviation amount in the fuel injection amount of each cylinder is calculated taking into account the fuel injection amount correction value determined in advance.

The following specifically describes the technique of the diagnosis method 2 with reference to FIG. 13 to FIG. 15.

As shown in FIG. 13, if the fuel injection amounts of the cylinders in phases opposite to each other deviate from each other, it is difficult to specify which cylinder deviates to what extent. Therefore, in advance, the cylinders (i.e., the i-th cylinder and the j-th cylinder) in phases opposite to each other are combined to ascertain the characteristic of F2 when their fuel injection amounts are varied by the same amount (see FIG. 15).

Since the characteristic in relation to the variation amount in the fuel injection amount is predicted not to be a straight line (see FIG. 14), it is preferable that the data is collected and calculated in the form of a map. That is, in a pre-measurement, multiple steps of both increase and decrease in the variation amount of the fuel injection amount are taken, and the characteristics of the multiple steps are plotted as shown in FIG. 15. Then, a deviation amount $\Delta Q_{ij}$ in the fuel injection amount and coordinate values ($\beta_{ij}$, $L_{ij}$) of the operating point are stored.

In the operation for plotting the operating point on the complex plane of F1, the measured operating point at the time of operating the engine is first plotted on the complex plane of F1. At this time, the operating point is positioned on the operation line of each cylinder obtained in FIG. 10. This is because, as shown in FIG. 13, there will be no variation in the direction of $\beta$, when the fuel injection amounts of the cylinders in the phases opposite to each other deviate. If the fuel injection amount of the i-th cylinder and the fuel injection amount in the j-th cylinder deviate by the same amount, the operating point on the complex plane of F1 does not move from the origin.

An operation of varying the fuel injection amount is such that, when the operating point on the complex plane of F1 is not in the origin, the fuel injection amount to either one of the i-th cylinder and the j-th cylinder is adjusted to guide the operating point to the origin. When the fuel injection amount of the i-th cylinder is adjusted, the corrected injection amount $\Delta Q_{i\#cor}$ at the time the operating point reaches the origin is saved. At this time, the deviation amounts in the fuel injection amounts of the i-th cylinder and the j-th cylinder, each of which cylinders is targeted, are equal to each other.

To specify a deviation amount common to each cylinder, an operating point is plotted on a complex plane of F2, and a deviation amount $\Delta Q_{ij}$ in the fuel injection amounts of the i-th cylinder and the j-th cylinder is calculated from characteristic data of deviation amount in the fuel injection amounts obtained in advance.

The deviation amount $\Delta Q_i$ in the fuel injection amount of the i-th cylinder can be calculated according to the following formula (14). Further, the deviation amount $\Delta Q_j$ in the fuel injection amount of the j-th cylinder can be calculated according to the following formula (15).

[Formula 9]

$$\Delta Q_i = \Delta Q_{ij} + \Delta Q_{i_cor} \quad \cdots (14)$$

$$\Delta Q_j = \Delta Q_{ij} \quad \cdots (15)$$

Thus, each of the diagnosis methods is described hereinabove.

Returning to the flowchart of FIG. 9, after the deviation amount $\Delta Q_i$ in the fuel injection amount of the i-th cylinder and the deviation amount $\Delta Q_j$ in the fuel injection amount of the j-th cylinder are calculated by the diagnosis method 1 or the diagnosis method 2, the process proceeds to the step ST17 to calculate fuel injection amounts $Q_{i\#cor}$ and $Q_{j\#cor}$ for each cylinder to cancel the unevenness in the fuel injection amounts of the cylinders by using the following formulas (16) and (17). Formula (16) is a formula for determining the fuel injection amount $Q_{i\#cor}$ for canceling a deviation in the fuel injection amount of the i-th cylinder, and the formula (17) is a formula for determining the fuel injection amount $Q_{j\#cor}$ for canceling a deviation in the fuel injection amount of the j-th cylinder.

[Formula 10]

$$Q_{i_cor} = Q_i + \Delta Q_i \quad \cdots (16)$$

$$Q_{j_cor} = Q_j + \Delta Q_j \quad \cdots (17)$$

After the fuel injection amount in each cylinder is calculated as described above, the process proceeds to the step ST18 to execute fuel injection by controlling the valve-open period of the injector 52 so that the calculated fuel injection amount is achieved.

As described hereinabove, in diagnosis of unevenness in the fuel injection amounts of the present embodiment, if the fuel injection amount of one of the cylinders is different from the fuel injection amounts of the other three cylinders, it is possible to diagnose that there is deviation in the fuel injection amount of any one of the two cylinders whose pistons reciprocate in the same phase and which do not successively operate on the combustion stroke (e.g., the first cylinder #1 and the fourth cylinder #4). Therefore, in actual fuel injection, fuel injection of the calculated fuel injection amount is performed in one of the cylinders, and if the unevenness in the fuel injection amounts is not cancelled, the fuel injection in one of the cylinders is brought back to the previous state and fuel injection of the calculated fuel injection amount is performed in the other one of the cylinders. This applies to cases where the fuel injection amounts of two cylinders are different from the fuel injection amounts the other two cylinders.

Since the above-described unevenness cancelling operation for the fuel injection amount is performed, the operations of the steps ST17 and ST18 corresponds to the operation of an unevenness cancelling correction unit of the present invention (an operation of correcting a control amount by varying the fuel combustion state for each cylinder so as to cancel unevenness in the fuel combustion states of the cylinders).

It should be noted that, in a case of a common rail fuel supply device 50, the fuel injection amount is controlled by the fuel pressure and the electric conduction period to the solenoid of the injector 52 and the like. Therefore, the deviation in the fuel injection amount may be cancelled with the following formulas (18) and (19).

[Formula 11]

$$\tau_{i_cor} = \tau_i + \Delta\tau_{i_cor} \quad \cdots (18)$$

$$\tau_{j_cor} = \tau_j + \Delta\tau_{j_cor} \quad \cdots (19)$$

In these formulas (18) and (19), $\tau$ is the electric conduction period to the injector 52 (corresponding to the valve-open period). That is, $\tau_i$ is the current valve-open period (before correction) for the injector 52 of the i-th cylinder, and $\tau_j$ is the current valve-open period (before correction) of the injector 52 of the j-th cylinder. Further, $\Delta\tau_{i\#cor}$ is a correction amount for the valve-open period of the injector 52 in the i-th cylinder, and $\Delta\tau_{j\#cor}$ is a correction amount for the valve-open period of the injector 52 in the j-th cylinder. Further, $\tau_{i\#cor}$ is the corrected valve-open period of the injector 52 in the i-th cylinder, and $\Delta\tau_{j\#cor}$ is the corrected valve-open period of the injector 52 in the j-th cylinder.

By repeating the above operation, unevenness in the fuel injection amounts of the injectors 52, 52, ... is cancelled.

In the present embodiment, the fuel injection amounts of the cylinders #1 to #4 can be controlled to be appropriate, by performing the correction operation of the total fuel injection amount and the unevenness cancelling operation of the fuel injection amounts of the injectors 52, 52, ...., as hereinabove described. That is, the fuel injection amounts of the injectors 52, 52, ... of the cylinders #1 to #4 can be matched with the target injection amount $Q_{tgt}$ without unevenness. With this, for example, a drop in the engine power can be suppressed or reduced, the rotational fluctuation can be reduced, and an exhaust emission can be improved.

(Modification 1)

The following describes a modification 1. The present modification defines an executable condition for the diagnosis operation for the total fuel injection amount and the unevenness diagnosis operation for the fuel injection amounts. In other words, each of the diagnosis operations is executed only when the executable condition is established.

The present invention utilizes that there is a correlation between the enthalpy of the fuel injection amount and the exhaust gas in relation to each of the cylinders #1 to #4 and the fluctuation amount in the rotational speed of the turbocharger 40. Therefore, in an operating condition where the above relationship may be lost, a diagnosis operation may cause a wrong diagnosis. Therefore, to achieve the reliability of the diagnosis operation, an operating condition that allows the diagnosis operations is preferably restricted. In view of this, the present modification defines such an operating condition.

The executable condition for each diagnosis operation is defined by the engine rotational speed, the engine load, the coolant temperature, the intake air pressure, the exhaust pressure, the intake air temperature, and the atmospheric pressure.

It should be noted that the engine rotational speed is calculated based on an output signal from the engine rotational speed sensor 102. The engine load is evaluated based on the output signal from the load state detection member 103. The coolant temperature is evaluated based on the output signal from the above coolant temperature sensor 105. The intake air pressure is evaluated based on the output signal from the intake pressure sensor 106. The exhaust pressure is evaluated based on the output signal from the exhaust pressure sensor 107. The intake air temperature is evaluated based on the output signal from the intake air temperature sensor 108. The atmospheric pressure is evaluated based on the output signal from the atmospheric pressure sensor 109.

The executable condition of the engine rotational speed for each diagnosis operation is established when the engine rotational speed is equal to or higher than a predetermined lower limit speed and is in a steady rotation (e.g., if the engine rotational speed stays unchanged for 1 sec). When the engine rotational speed varies during the diagnosis operation, the fuel injection amount is also likely to be varied. This leads to variation in the correlation (correlation between the fuel injection amount to each of the cylinders #1 to #4 and the rotational speed of the turbocharger 40), and a reliable diagnosis operation will become difficult. In view of this, the diagnosis operations are disabled in such a circumstance. The lower limit speed of the engine rotational speed is set based on an experiment or a simulation.

The executable condition of the coolant temperature for each diagnosis operation is established when the coolant temperature is equal to or higher than a predetermined temperature (the temperature of the engine 1 at the time of completing warming up). When the coolant temperature is low, the heat loss in the cylinders increases. This leads to variation in the correlation between the above-described enthalpy of the fuel injection amount and the exhaust gas and the fluctuation amount in the rotational speed of the turbocharger 40. In view of this, the executable condition of the coolant temperature is set to be established when it is equal to or higher than the predetermined temperature. When the coolant temperature is low, the lubricant temperature is also low. This may increase the friction loss around the bearing of the turbocharger 40, and varies the above-described correlation. Therefore, a reliable diagnosis operation may become difficult, and hence the diagnosis operations are not permitted in such a case.

The executable condition of the intake air pressure for each diagnosis operation is established when the intake air pressure is equal to or lower than a predetermined pressure-drop limit value. This is for disabling the diagnosis operations when the intake air pressure drops due to an influence of clogging and the like of the air filter 23, because a reliable diagnosis operation may be difficult in such a circumstance. The pressure-drop limit value for the intake air pressure is set based on an experiment or a simulation.

The executable condition of the exhaust pressure for each diagnosis operation is established when the exhaust pressure is equal to or lower than a predetermined limit value. This is for disabling the diagnosis operations when the pressure at the outlet side of the turbine wheel 42 is varied due to an increase in deposition of soot in the exhaust gas purification device 33 (particularly in the DPF), because a reliable diagnosis operation may be difficult in such a circumstance. The limit value for the exhaust pressure is set based on an experiment or a simulation.

The executable condition of the intake air temperature for each diagnosis operation is established when the intake air temperature is a room temperature (e.g., approximately 20°C to 25°C).

The executable condition of the atmospheric pressure for each diagnosis operation is established when the atmospheric pressure is equal to or lower than a predetermined pressure (e.g. 1000 mb).

As to the engine load, the executable condition for the diagnosis operation of the total fuel injection amount and the executable condition for the unevenness diagnosis operation are different. Specifically, the executable condition for the diagnosis operation of the total fuel injection amount is established when the engine load is equal to or higher than a predetermined lower limit load and is steady (e.g., does not change for 1 sec). On the other hand, the executable condition of the fuel injection amount for the unevenness diagnosis operation is established when the engine load is equal to a predetermined limit load and is steady (e.g., does not change for 1 sec). This is for disabling the diagnosis operations when the engine load is low, because when the rotational speed of the engine 1 is in a low-idling state and the like and the engine load is low, the rotational speed of the turbocharger 40 is low and the correlation between the enthalpy of the fuel injection amount and the exhaust gas and the fluctuation amount in the rotational speed of the turbocharger 40 varies. The lower limit load of the engine load is set based on an experiment or a simulation.

By defining the executable condition for the diagnosis operation of the total fuel injection amount and the unevenness diagnosis operation as hereinabove described, sufficiently reliable diagnosis operations will be possible. Therefore, the fuel injection amount can be suitably corrected according to the diagnosis result of these diagnosis operations.

(Modification 2)

The following describes a modification 2. The present modification is for switching between enabling and disabling of the diagnosis operation for the total fuel injection amount and the unevenness diagnosis operation for the fuel injection amounts, according to an operating condition of the EGR device 60.

While the exhaust gas is partially circulated to the air-intake system 20 by the EGR device 60, the frequencies F1 to F3 are hardly affected if the EGR ratio is constant; however, the frequency F4 is largely affected (see FIG. 16 showing an example relationship between the EGR rate and the F4 strength). This is because the EGR gas causes variation in the amount of gas flowing in the air-intake system 20. This varies the combustion amount in a cylinder with respect to the fuel injection amount, affecting the rotational speed characteristic of the turbocharger 40. As should be understood from this, variation in the frequency F4 causes difficulty in achieving a reliable diagnosis operation of the total fuel injection amount.

To address this, the present modification specifies the EGR rate of "0" as the executable condition for the diagnosis operation of the total fuel injection amounts. In other words, the diagnosis operation of the total fuel injection amount is enabled only during a period in which a valve opening degree instruction signal output from the engine ECU 100 to the EGR valve 62 is "opening degree 0".

Further, as for the above-described unevenness diagnosis operation as well, to achieve sufficient reliability, it is preferable that the EGR rate to be "0" is specified as the executable condition for the unevenness diagnosis operation (the unevenness in the fuel combustion states (unevenness in the fuel injection amounts) among the cylinders #1 to #4 is diagnosed on condition that circulation of the exhaust gas by the EGR device 60 is stopped).

FIG. 17 is a flowchart showing steps of control of the present modification. This flowchart is repeated every predetermined period after the start switch of the engine 1 is turned on.

First, in step ST 21, whether or not the engine 1 is in a steady operation state is determined. The steady operation state herein refers to a state in which a control operation at a time of starting the operation of the engine 1 (start mode) is not performed or a state in which a control operation at a time of stopping the operation (stop mode) is not performed.

If the engine 1 is not in the steady operation state and the step ST21 results in NO, the process is returned without executing the above diagnosis operation.

On the other hand, when the engine 1 is in the steady operation state and the step ST21 results in YES, the process proceeds to the step ST22 to determine whether or not the above described executable condition for the diagnosis operation is established (see Modification 1). When the executable condition for the diagnosis operation is not established and the step ST22 results in NO, the process is returned without executing the diagnosis operation.

On the other hand, if the executable condition for the diagnosis operation is established and the step ST22 results in YES, the process proceeds to the step ST23 to close the EGR valve 62. In other words, a valve opening degree instruction signal of "opening degree 0" is output from the engine ECU 100 to the EGR valve 62 to close the EGR valve 62. It should be noted that the operation of closing the EGR valve 62 may be performed every time the executable condition for the diagnosis operation is established, or may be executed when the executable condition is established after the elapse of a predetermined period from the previous diagnosis operation.

After the EGR valve 62 is closed as described above, the process proceeds to the step ST24 to execute the above-described diagnosis operation (diagnosis operation of the total fuel injection amount and the unevenness diagnosis operation for the fuel injection amounts). Descriptions of this diagnosis operations are omitted here as they are described in the above embodiment. It should be noted however that, in a case where the diagnosis operation of the total fuel injection amount is to be performed only when the engine load reaches the upper limit value, only the unevenness diagnosis operation for the fuel injection amounts is performed in this step ST24 while the operation of the engine 1 is in a partial load range, as described hereinabove.

After the diagnosis operations, the process proceeds to the step ST25, and the correction operations for the fuel injection amounts according to the diagnosis result (the correction operation for the total fuel injection amount and the correction operation for cancelling the unevenness in the fuel injection amounts) are executed. Description of the correction operations for the fuel injection amounts are also omitted here as they are described in the above embodiment.

As described hereinabove, the present modification specifies the EGR Rate of "0" as the executable condition for the diagnosis operations. Therefore, sufficiently reliable diagnosis operations will be possible, and the fuel injection amount can be suitably corrected according to the diagnosis result of these diagnosis operations.

In the present modification, the EGR rate may be calculated, and the fuel injection amount may be corrected according to the EGR rate. That is, the EGR rate is calculated by using, as parameters, the exhaust pressure, the intake air temperature, the EGR gas temperature, the opening degree of the EGR valve 62, and the like. Then, a relationship between the EGR rate and the correction amount of the fuel injection amounts is ascertained and mapped in advance through an experiment or a simulation, and the calculated EGR rate is applied to the map to correct the fuel injection amounts. In this case, the fuel injection amounts can be suitably corrected, irrespective of the operational state of the engine 1 (even in a state where the exhaust gas is recirculated to the air-intake system 20).

(Modification 3)

The following describes a modification 3. The present modification deals with a case of a turbocharger 40 including the wastegate valve 72 or a VGT (Variable Geometry Turbo) having a variable geometry mechanism, and is configured to obtain the correction amount of the fuel injection amounts based on an exhaust gas amount passing the wastegate valve 72 and the variable geometry mechanism. Since the structure of the variable geometry mechanism is publicly known, the description thereof is omitted here.

The following describes a case of taking into account the exhaust gas amount passing the wastegate valve 72.

An exhaust gas amount $G_{tur}$ passing the turbine wheel 42 of the turbocharger 40 can be calculated with the following formula (20).

[Formula 12]

$$G_{tur} = G_{exh} - G_{WG} = G_{air} + G_{fuel} - G_{WG} \quad \cdots (20)$$

As is shown in FIG. 18 (a schematic view showing the gas amount, the gas pressure, and the gas temperature of each part of an intake/exhaust system of the engine 1), $G_{exh}$ is a total amount of exhaust gas, $G_{wg}$ is the exhaust gas amount passing the wastegate valve 72. Further, $G_{air}$ is the amount of taken-in air, and $G_{fuel}$ is the fuel injection amount.

Therefore, with ascertainment of the relationship between the value instructed by the signal output from the engine ECU 100 and a passage area of the exhaust gas or the exhaust gas amount, the exhaust gas amount $G_{tur}$ passing the turbine wheel 42 can be calculated.

Further, FIG. 19 shows an engine 1 including the mechanical type wastegate valve 72 as in the above embodiment, in which the exhaust gas passage in the front and the rear of the turbine wheel 42 is replaced by a gas passage system having a simple throttle (a schematic view showing the cross-sectional area, the gas pressure, and the gas temperature in the gas passage around the wastegate valve 72).

In this case, the passage area $A_{out}$ of the outlet side of the turbine wheel 42 can be calculated with the following formula (21).

[Formula 13]

$$A_{out} = A_{tur} + A_{WG} \quad \cdots (21)$$

Here, $A_{tur}$ is the passage area on the inlet side of the turbine wheel 42, and $A_{WG}$ is the passage area corresponding to the opening degree of the wastegate valve 72.

In this case, since the passage area $A_{WG}$ corresponding to the opening degree of the wastegate valve 72 is variable, the total passage area $A_{out}$ of the part of the turbine wheel 42 can be calculated with the following formula (22), by applying an equation of continuity and an energy preservation formula.

[Formula 14]

$$A_{out} = \frac{T_{DOC_in}}{P_{DOC_in}} \cdot \frac{1}{\sqrt{\left(\frac{T_{exh}}{A_{in} \cdot P_{exh}}\right)^2 - \frac{2}{R^2 \cdot G_{exh}^{\ 2}} \cdot \frac{\kappa \cdot R}{\kappa - 1}\left(T_{exh} - T_{DOCin}\right) + P_{TC}}} \quad \cdots (22)$$

Here, the $P_{TC}$ is an expansion work of the turbine wheel 42. Further, $T_{DOC\#in}$ is the exhaust gas temperature on the inlet side of the exhaust gas purification device 33 on the downstream side of the turbine wheel 42. $P_{DOC\#in}$ is the exhaust gas pressure on the inlet side of the exhaust gas purification device 33. $T_{exh}$ is the exhaust gas temperature on the inlet side of the turbine wheel 42. $P_{exh}$ is the exhaust gas pressure on the inlet side of the turbine wheel 42. R is the gas constant, and $\kappa$ is the specific heat ratio.

The passage area $A_{out}$ in a case where heat input is varied while the engine rotational speed is constant is calculated in advance and plotted on a coordinate axis as shown in FIG. 20. Then, it is found that the passage area $A_{out}$ is constant in an operation area where the wastegate valve 72 is not opened, and that the passage area $A_{out}$ increases with an increase in the opening degree of the wastegate valve 72 accompanied by an increase in the fuel injection amount. The part where the passage area $A_{out}$ is constant is regarded as an equivalent turbine passage area $A_{tur}$, and the variable part is regarded as an equivalent wastegate passage area $A_{WG}$.

Then, from the ratio of both passage areas, the turbine passing flow rate $G_{tur}$ can be ultimately calculated as in the following formula (23).

[Formula 15]

$$G_{tur} = \frac{A_{tur}}{A_{out}} \cdot G_{exh} \quad \cdots (23)$$

Then, the correction value $Q_{cor\#WG}$ for the deviation amount in the fuel injection amount can be calculated with the following formula (24). This correction value is added to the correction amount of the fuel injection amount described above.
[Formula 16]

$$Q_{cor_WG} = \gamma \cdot G_{tur} \quad \cdots \ (24)$$

It should be noted that $\gamma$ in the formula (24) is a conversion coefficient obtained in advance through an experiment or a simulation.
It should be noted that, even in a turbocharger 40 having a variable geometry mechanism, a correction value for the deviation amount in the fuel injection amount can be calculated as described above, according to the opening degree of a nozzle vane of the variable geometry mechanism (the opening degree of the nozzle vane for varying the exhaust gas passage area).
With the correction operation as described above, the fuel injection amount can be suitably corrected even in an engine 1 with a turbocharger 40 having the wastegate valve 72 or an engine 1 with a VGT.

(Modification 4)

The following describes a modification 4. The present modification deals with a case of adopting a two-stage turbocharger as the turbocharger 40.
FIG. 21 is a diagram showing a schematic structure around the turbocharger 40 of an engine 1 related to the present modification. As shown in FIG. 21, the turbocharger 40 includes a high-pressure stage turbocharger 40a and a low-pressure stage turbocharger 40b.
The high-pressure stage turbocharger 40a includes: a high-pressure stage compressor wheel 41a arranged in a relatively downstream side (further downstream side than a low-pressure stage compressor wheel 41b of the low-pressure stage turbocharger 40b) in the air-intake pipe 21; and a high-pressure stage turbine wheel 42a arranged in a relatively upstream (further upstream than a low-pressure stage turbine wheel 40b of the low-pressure stage turbocharger 42b) in the exhaust pipe 31, which rotates with a fluid energy of the exhaust gas. The high-pressure stage compressor wheel 41a and the high-pressure stage turbine wheel 42a are connected by a rotation shaft 43a.
Further, the low-pressure stage turbocharger 40b includes: a low-pressure stage compressor wheel 41b arranged in a relatively upstream side (further upstream side than the high-pressure stage compressor wheel 41a of the high-pressure stage turbocharger 40a) in the air-intake pipe 21; and a low-pressure stage turbine wheel 42b arranged in a relatively downstream side (further downstream than the high-pressure stage turbine wheel 42a of the low-pressure stage turbocharger 40a) in the exhaust pipe 31, which rotates with a fluid energy of the exhaust gas. The low-pressure stage compressor wheel 41b and the low-pressure stage turbine wheel 42b are connected by a rotation shaft 43b.
The present invention uses a phenomenon in which the rotational speed of the turbocharger 40 varies due to energy pulsation at the time of exhaust blow down in each cylinder. Therefore, the diagnosis operation is preferably performed according to the rotational speed of the high-pressure stage turbocharger 40a whose rotational speed is largely varied, largely affected by the energy pulsation.
Therefore, in the present modification, the turbo rotational speed sensor 104 is arranged to face the blades of the high-pressure stage compressor wheel 41a of the high-pressure stage turbocharger 40a. This structure corresponds to "in the multi-cylinder internal combustion engine having the exhaust turbochargers arranged serially with respect to a flow of gas, the rotational speed detector configured to output a signal according to the rotational speed of at least one of the exhaust turbochargers is arranged nearby a high-pressure side exhaust turbocharger, and outputs a signal according to the rotational speed of the high-pressure side exhaust turbocharger" of the present invention.
By adopting such a structure of the turbo rotational speed sensor 104, sufficient reliability of the diagnosis operation can be achieved even in an engine 1 including a two-stage turbocharger.

- Other Embodiments -

Note that the above embodiments and modifications are illustrative in all respects, and is not intended to be a basis for limiting interpretation. Accordingly, the scope of the present invention is not to be interpreted solely by the above embodiments and modifications, but is defined based on the description of the appended claims. Further, the scope of the present invention encompasses all changes within the meaning and scope of the appended claims.
For example, the above embodiments and modifications deal with a case where the present invention is applied to an engine 1 for a ship, but the present invention is also applicable to an engine in other applications (e.g., for an electric power generator, for a vehicle, and the like).

Further, the above embodiments and modifications deal with a case where the present invention is applied to a diesel engine 1. Application of the present invention is not limited to this, and can be applied to various multi-cylinder internal combustion engines such as a gasoline engine and a gas engine. The present invention can also be applied to a multi-cylinder internal combustion engine including a fuel reformation cylinder and a plurality of output cylinders, which is configured to obtain output by supplying fuel reformed in the fuel reformation cylinder to the output cylinders.

Further, the above embodiments and modifications deal with a case where an executable condition of diagnosis operation is set for the state quantities of the engine rotational speed, the engine load, the coolant temperature, the intake air pressure, the exhaust pressure, the intake air temperature, the atmospheric pressure, and the diagnosis operation is enabled only when all the state quantities satisfy the executable condition. The present invention however is not limited to this. The executable condition for the diagnosis operation may be set for one the state quantities or some of the state quantities selected out of the state quantities, and the diagnosis operation may be enabled only when the state quantity satisfies, or the selected state quantities satisfy the executable condition.

Further, in each of the above embodiments and each modification, diagnosis of unevenness in the fuel injection amount from the injectors 52, 52, ... is described as an exemplary form of diagnosis of the unevenness in the fuel combustion states of the cylinders #1 to #4. The present invention is not limited to this, and may be utilized for diagnosing unevenness in the fuel properties of the cylinders #1 to #4, or unevenness in the combustion temperatures.

Further, the above embodiment and modifications deal with a case where the diagnosis operation is performed during operation of the engine 1, and a correction operation of the fuel injection amount according to the diagnosis result is performed during the operation. The present invention is not limited to this, and performing the diagnosis operation after the operation of the engine 1 is completed is also encompassed within the scope of the technical idea. For example, during operation of the engine 1, the rotational speed information of the engine 1 and the rotational speed information of the turbocharger 40 are obtained and stored in the RAM and the like. Then, after the operation of the engine 1 ends, the diagnosis of the total fuel injection amount and the diagnosis of unevenness in the fuel injection amounts are performed from the stored rotational speed information. In other words, only the information during an operational state where a sufficiently reliable diagnosis is possible is extracted out of the rotational speed information, and diagnosis of the total fuel injection amount and diagnosis of unevenness in the fuel injection amounts are performed based on the rotational speed information extracted. Then, a control (correction of fuel injection amount) according to the diagnosis result is performed, or the maintenance of the engine 1 is performed according to the result of the diagnosis, in the next engine operation.

Further, the above embodiment and modifications deal with a case where the rotational speed of the turbocharger 40 is detected by arranging the turbo rotational speed sensor 104 to face the compressor wheel 41. The present invention however is not limited to this. The rotational speed of the turbocharger 40 may be detected by arranging the turbo rotational speed sensor 104 to face the turbine wheel 42 (this requires the turbo rotational speed sensor 104 be highly heat resistant), or face the rotation shaft 43.

Further, in the above embodiment and modifications, the frequency characteristic is expanded into a Fourier series, and the characteristic is plotted on a complex plane to determine an operating point. Then, a cylinder with a different fuel combustion state from that of the other cylinders is specified based on an angle of a vector ranging from the origin of the complex plane to the operating point with respect to the coordinate axis of the complex plane. Further, based on a length of the vector, deviation in the state quantity of the specified cylinder in relation to the combustion state from the state quantities of the other cylinders is specified. The present invention does not necessarily have to diagnose the unevenness in the fuel combustion states based on a vector on a complex plane. Then, a cylinder with a different fuel combustion state from that of the other cylinders may be specified based on a value obtained by expanding the frequency characteristic into Fourier series (corresponding to the value of the operating point on the complex plane), and deviation in the state quantity of the specified cylinder in relation to the combustion state from the state quantities of the other cylinders may be specified. Such a structure is also encompassed within the scope of the technical idea of the present invention.

This application claims priority from Japanese Patent Application No. 2016-228735, filed in Japan on November 25, 2016, the entire content of which is hereby incorporated by reference. The entire contents of the documents cited herein are hereby specifically incorporated by reference.

## Industrial Applicability

The present invention is applicable to a device configured to diagnose the fuel combustion state in each cylinder of an engine having a turbocharger, and a control device configured to control the engine according to the diagnosis result.

## Description of the Reference Numeral

1 engine (multi-cylinder internal combustion engine)
20 air-intake system
30 exhaust system
40 turbocharger (exhaust turbocharger)
40a high-pressure stage turbocharger (high-pressure side exhaust turbocharger)
52 injector
60 EGR device
72 wastegate valve
100 engine ECU
102 engine rotational speed sensor (rotational speed detector, internal combustion engine rotational speed detection unit)
103 load state detection member
104 turbo rotational speed sensor (rotational speed detector, turbocharger rotational speed detection unit)
105 coolant temperature sensor
106 intake air pressure sensor
107 exhaust pressure sensor
108 intake air temperature sensor
109 atmospheric pressure sensor
#1 to #4 cylinders

## Claims

1. A diagnosis device for a multi-cylinder internal combustion engine having one or more exhaust turbochargers, the device configured to diagnose a fuel combustion state in each of cylinders in the internal combustion engine, the diagnosis device comprising:

    a rotational speed detector configured to output a signal corresponding to a rotational speed of at least one of the one or more exhaust turbochargers or a signal corelated to fluctuation in the rotational speed of at least one of the one or more exhaust turbochargers; and
    a fuel combustion state diagnosis unit configured to diagnose unevenness in fuel combustion states of the cylinders through a frequency analysis involving a fast Fourier transformation of a frequency characteristic of a signal output from the rotational speed detector.

2. The diagnosis device for the internal combustion engine according to claim 1, wherein
the fuel combustion state diagnosis unit is configured to determine an operating point corresponding to a complex plane through the frequency analysis involving the fast Fourier transformation, and based on an angle of a vector ranging from the origin of the complex plane to the operating point with respect to a coordinate axis of the complex plane and a length of the vector, diagnose unevenness in the fuel combustion states among cylinders.

3. The diagnosis device for the internal combustion engine according to claim 2, wherein
the fuel combustion state diagnosis unit is configured to specify a cylinder whose fuel combustion state is different from the other cylinders, based on an angle formed by the vector with respect to the coordinate axis of the complex plane, and specify a deviation in a state quantity related to fuel combustion in the specified cylinder from state quantities of the other cylinders, based on a length of the vector.

4. The diagnosis device for the internal combustion engine according to claim 1, 2, or 3, wherein
the fuel combustion state diagnosis unit compares a strength of a frequency resulting from dividing a combustion frequency obtained from a signal output from the rotational speed detector by the number of cylinders of the multi-cylinder internal combustion engine with a strength of a frequency resulting from dividing the combustion frequency by "1/2" of the number of cylinders of the multi-cylinder internal combustion engine, and if the strength of the former frequency is higher than the strength of the latter frequency, diagnoses that a fuel combustion state in one of the cylinders is different from fuel combustion states of the other cylinders, or that fuel combustion states in cylinders successively operating on a combustion stroke are different from fuel combustion states of the other cylinders.

5. The diagnosis device for the internal combustion engine according to claim 1, 2, or 3, wherein
the fuel combustion state diagnosis unit compares a strength of a frequency resulting from dividing a combustion frequency obtained from a signal output from the rotational speed detector by the number of cylinders of the multi-cylinder internal combustion engine with a strength of a frequency resulting from dividing the combustion frequency by "1/2" of the number of cylinders of the multi-cylinder internal combustion engine, and if the strength of the latter frequency is higher than the strength of the former frequency, diagnoses that fuel combustion states in cylinders whose pistons reciprocate in the same phase but not successively operating on a combustion stroke are different from fuel combustion states of the other cylinders.

**6.** The diagnosis device for the internal combustion engine according to any one of claims 1 to 5, wherein:

a state quantity of at least one of an engine rotational speed, an engine load, a coolant temperature, an intake air pressure, an exhaust pressure, an intake air temperature of the multi-cylinder internal combustion engine, and an atmospheric pressure is set as an executable condition for combustion state diagnosis; and
the fuel combustion state diagnosis unit diagnoses unevenness in fuel combustion states among the cylinders, when the executable condition for the combustion state diagnosis is established.

**7.** The diagnosis device for the internal combustion engine according to any one of claims 1 to 6, wherein:

the multi-cylinder internal combustion engine comprises an EGR device configured to recirculate exhaust gas in an exhaust system to an air-intake system; and
the fuel combustion state diagnosis unit is configured to diagnose unevenness in fuel combustion states among the cylinders on condition that the recirculation of the exhaust gas by the EGR device is stopped.

**8.** The diagnosis device for the internal combustion engine according to any one of claims 1 to 7, wherein
in the multi-cylinder internal combustion engine having the exhaust turbochargers arranged serially with respect to a flow of gas, the rotational speed detector configured to output a signal according to the rotational speed of at least one of the exhaust turbochargers is arranged nearby a high-pressure side exhaust turbocharger, and outputs a signal according to the rotational speed of the high-pressure side exhaust turbocharger.

**9.** A diagnosis method for a multi-cylinder internal combustion engine having an exhaust turbocharger, the method configured to diagnose a fuel combustion state in each of cylinders in the internal combustion engine, comprising the step of
diagnosing unevenness in fuel combustion states of the cylinders through a frequency analysis using a fast Fourier transformation of a frequency characteristic of a signal according to a rotational speed of the exhaust turbocharger or a signal having correlation with a rotational speed of the exhaust turbocharger.

**10.** A control device configured to control the internal combustion engine according to a diagnosis result by the diagnosis device according to any one of claims 1 to 8, comprising
an unevenness cancelling correction unit configured to correct a control amount by varying the fuel combustion state of each cylinder so as to cancel the unevenness in the fuel combustion states of the cylinders.

**11.** The control device for the internal combustion engine according to claim 10, wherein
the or each of one or more exhaust turbochargers comprises at least one of a wastegate valve and a variable geometry mechanism, and the unevenness cancelling correction unit is configured to correct the control amount according to an exhaust gas passage area adjusted by an opening degree of the wastegate valve or by the variable geometry mechanism.

**12.** A control method for controlling the internal combustion engine according to a diagnosis result by the diagnosis method according to claim 9 for the internal combustion engine, comprising the step of
correcting a control amount by varying the fuel combustion state of each cylinder so as to cancel the unevenness in the fuel combustion states of the cylinders.

**13.** A diagnosis device for a multi-cylinder internal combustion engine having one or more exhaust turbochargers, the device configured to diagnose a fuel combustion state in each of cylinders in the internal combustion engine, the diagnosis device comprising:

an internal combustion engine rotational speed detection unit configured to output a signal corresponding to a rotational speed of the multi-cylinder internal combustion engine;
a turbocharger rotational speed detection unit configured to output a signal corresponding to a rotational speed of the exhaust turbocharger; and

a fuel combustion state diagnosis unit configured to diagnose a fuel combustion state of each cylinder by calculating a total fuel feed rate to the cylinders within a single cycle of the internal combustion engine, using a frequency characteristic of a signal output from the turbocharger rotational speed detection unit and an engine rotational speed calculated based on the signal output from the internal combustion engine rotational speed detection unit, as parameters.

**14.** A control device configured to control the internal combustion engine according to a diagnosis result by the diagnosis device according to claim 13, comprising
a fuel feed rate correction unit configured to obtain an average fuel feed rate by dividing, by the number of cylinders, a total fuel feed rate in the cylinders within a single cycle of the multi-cylinder internal combustion engine, and correct the fuel feed rate of each cylinder by an amount of deviation between the average fuel feed rate and a target fuel feed rate of each cylinder determined according to a required output.

FIG.1

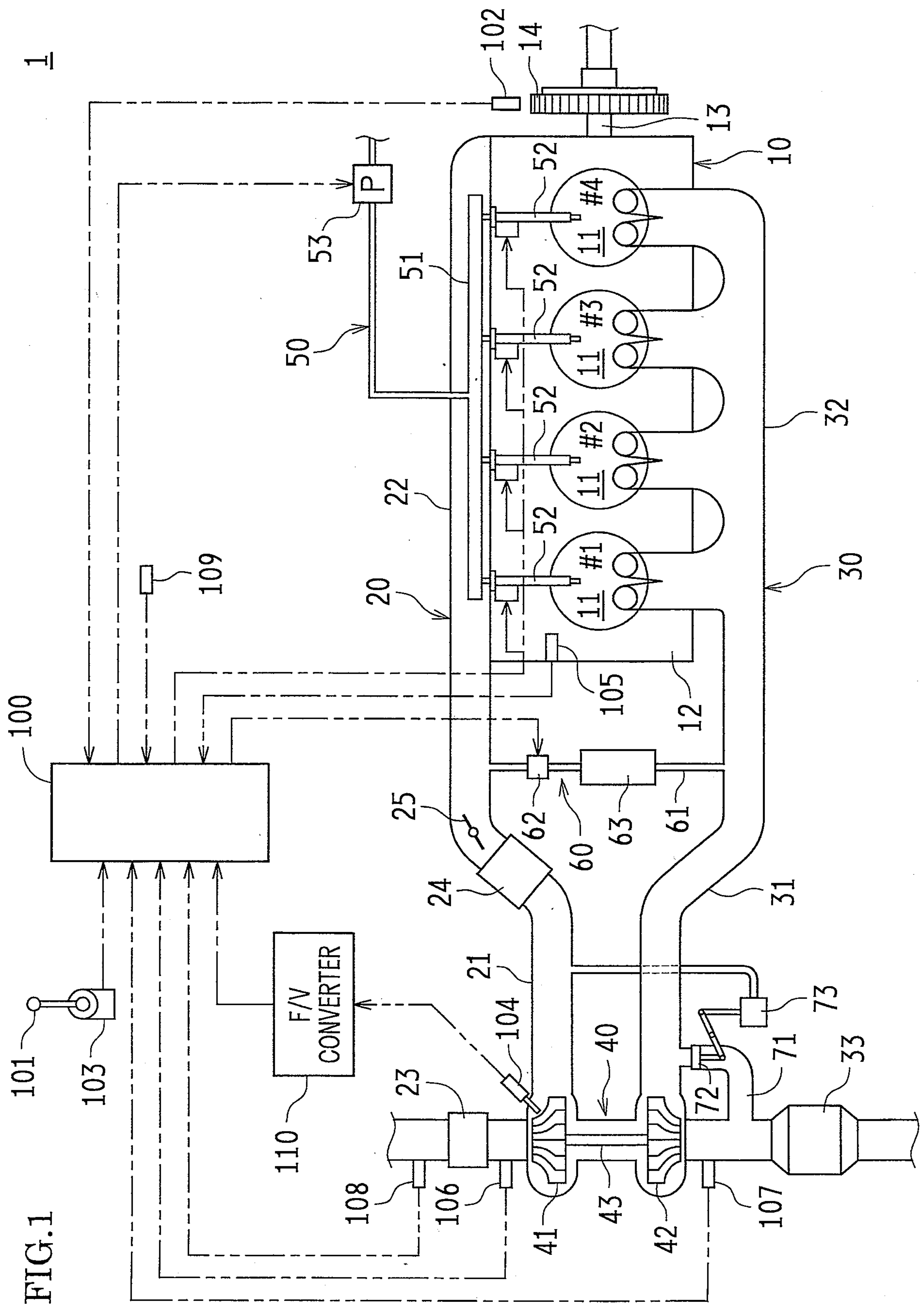
1
F/V CONVERTER
P
#1
#2
#3
#4
10
11
12
13
14
20
21
22
23
24
25
30
31
32
33
40
41
42
43
50
51
52
53
60
61
62
63
71
72
73
100
101
102
103
104
105
106
107
108
109
110

FIG.2

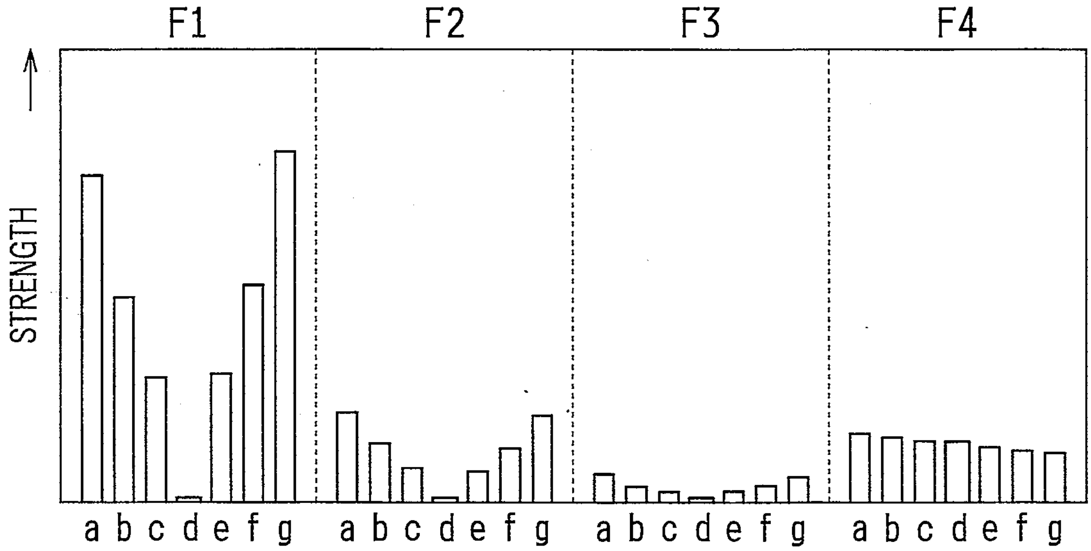
F1
F2
F3
F4
STRENGTH
a b c d e f g
a b c d e f g
a b c d e f g
a b c d e f g

FIG.3

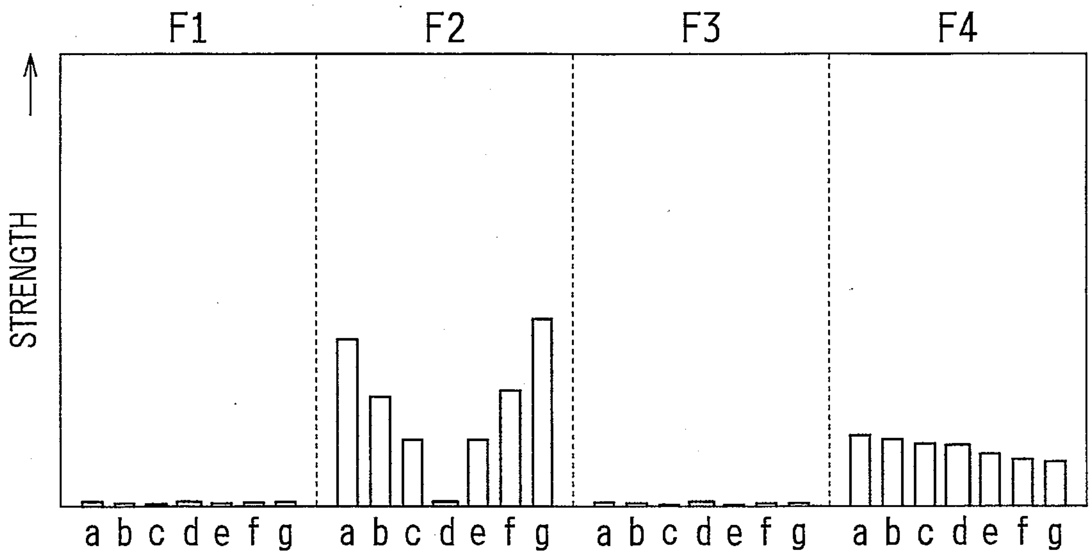
F1
F2
F3
F4
STRENGTH
a b c d e f g
a b c d e f g
a b c d e f g
a b c d e f g

FIG.4

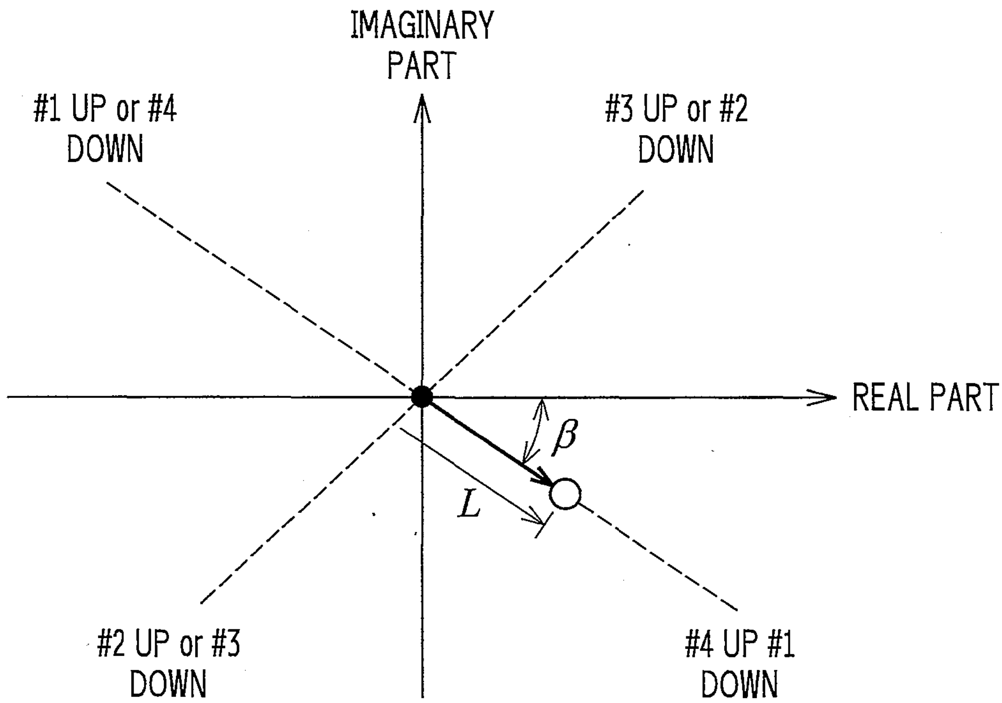
IMAGINARY
PART
#1 UP or #4
DOWN
#3 UP or #2
DOWN
REAL PART
β
L
#2 UP or #3
DOWN
#4 UP #1
DOWN

FIG.5

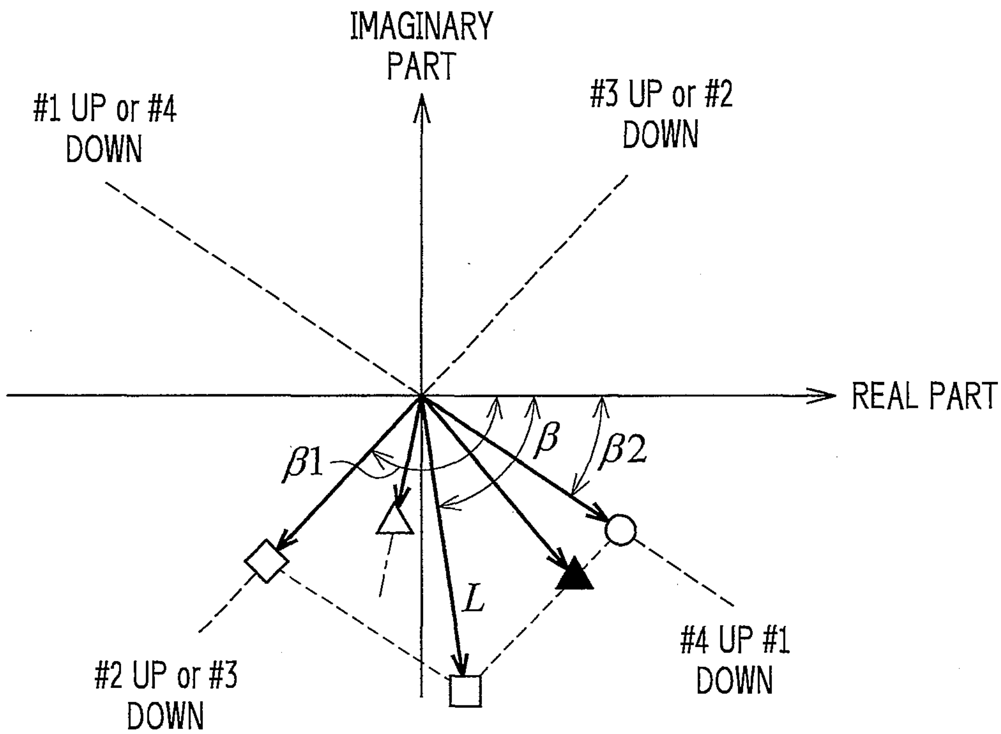
IMAGINARY
PART
#1 UP or #4
DOWN
#3 UP or #2
DOWN
REAL PART
β1
β
β2
L
#2 UP or #3
DOWN
#4 UP #1
DOWN

FIG.6

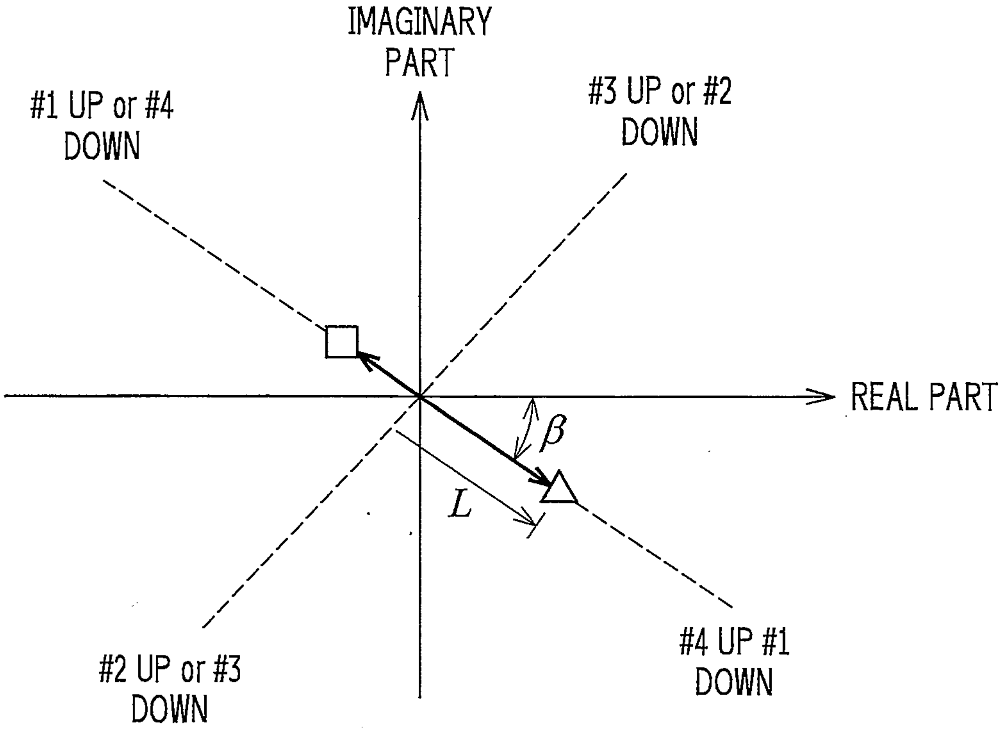
IMAGINARY PART
REAL PART
#1 UP or #4 DOWN
#3 UP or #2 DOWN
#2 UP or #3 DOWN
#4 UP #1 DOWN
β
L

FIG.7

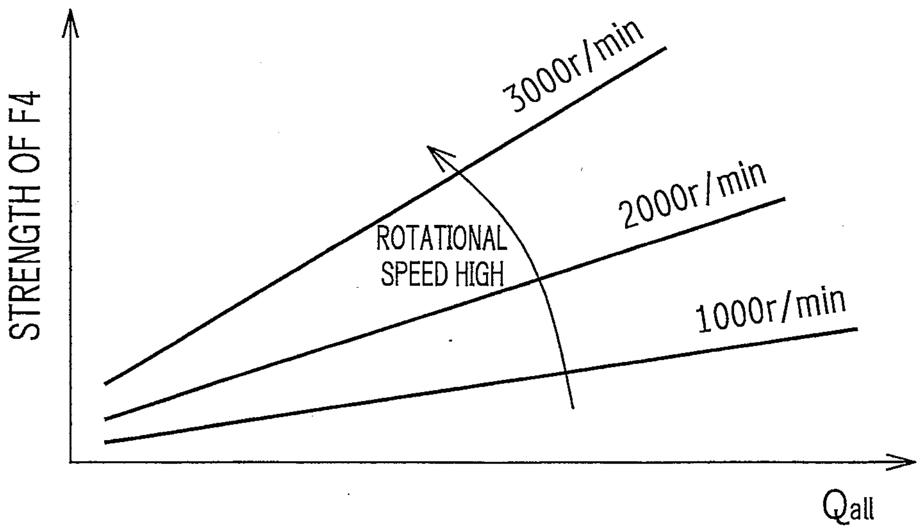
STRENGTH OF F4
3000r/min
2000r/min
1000r/min
ROTATIONAL SPEED HIGH
Qall

FIG.8

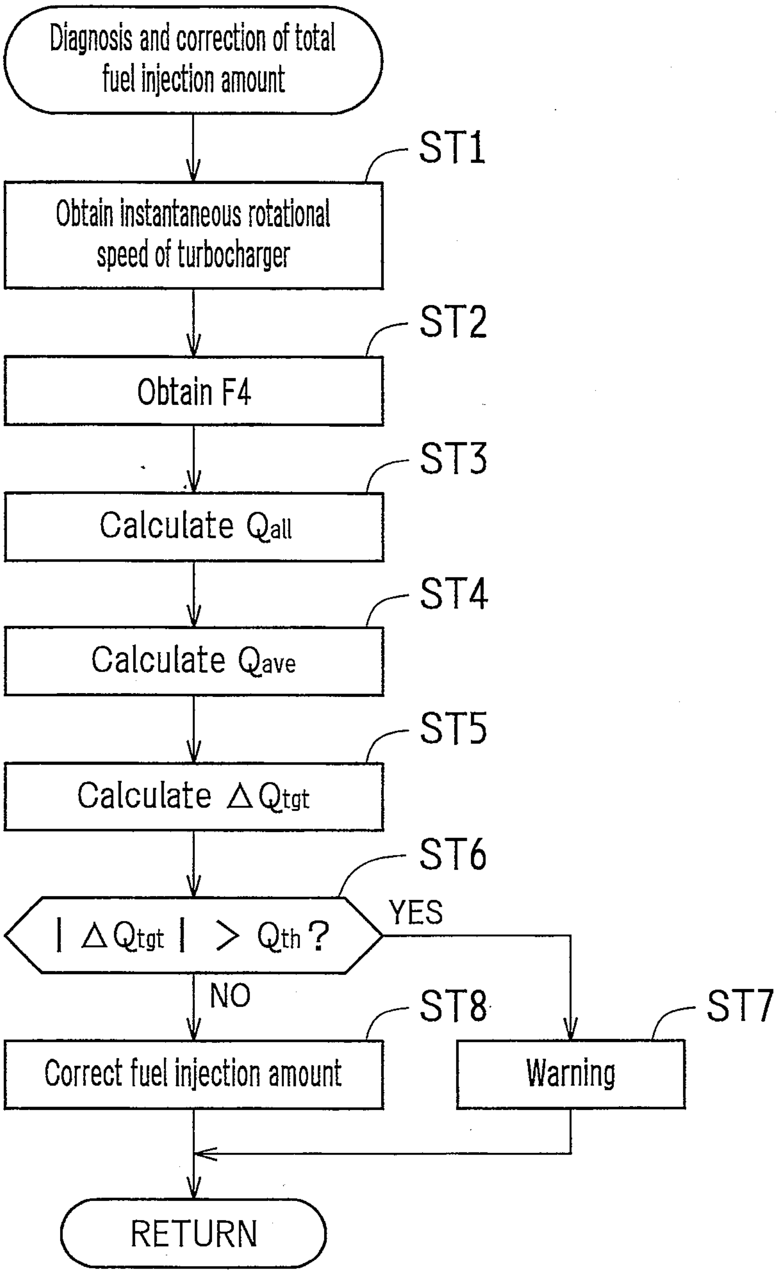
Diagnosis and correction of total fuel injection amount
ST1
Obtain instantaneous rotational speed of turbocharger
ST2
Obtain F4
ST3
Calculate Qall
ST4
Calculate Qave
ST5
Calculate ΔQtgt
ST6
|ΔQtgt| > Qth ?
YES
NO
ST8
Correct fuel injection amount
ST7
Warning
RETURN

FIG.9

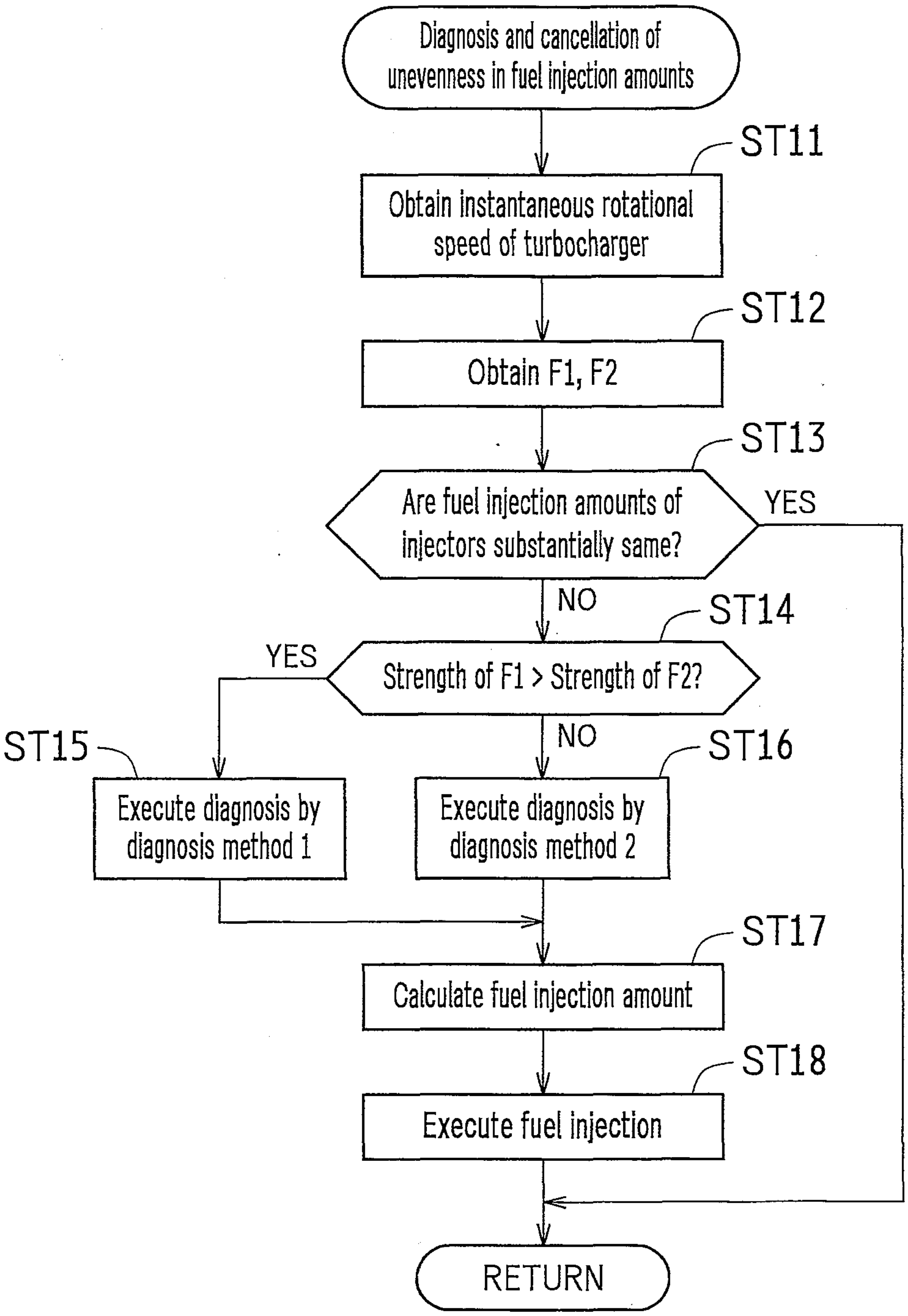
Diagnosis and cancellation of unevenness in fuel injection amounts
ST11
Obtain instantaneous rotational speed of turbocharger
ST12
Obtain F1, F2
ST13
Are fuel injection amounts of injectors substantially same?
YES
NO
ST14
Strength of F1 > Strength of F2?
YES
NO
ST15
Execute diagnosis by diagnosis method 1
ST16
Execute diagnosis by diagnosis method 2
ST17
Calculate fuel injection amount
ST18
Execute fuel injection
RETURN

FIG.10

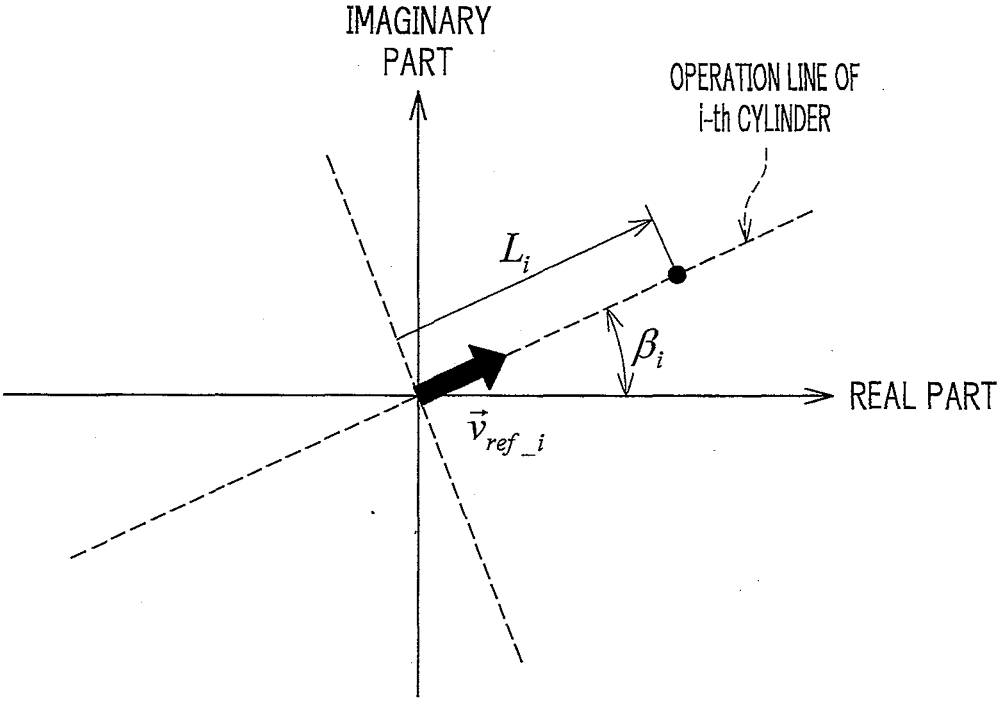
IMAGINARY PART
OPERATION LINE OF i-th CYLINDER
$L_i$
$\beta_i$
REAL PART
$\vec{v}_{ref_i}$

FIG.11

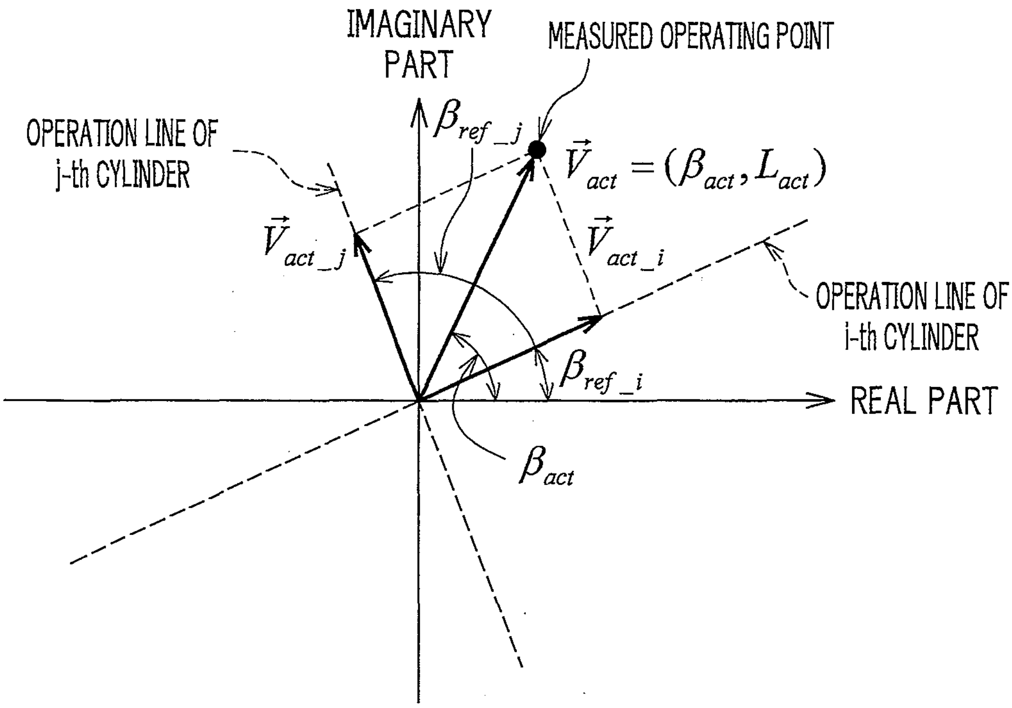
IMAGINARY PART
MEASURED OPERATING POINT
OPERATION LINE OF j-th CYLINDER
$\beta_{ref_j}$
$\vec{V}_{act} = (\beta_{act}, L_{act})$
$\vec{V}_{act_j}$
$\vec{V}_{act_i}$
OPERATION LINE OF i-th CYLINDER
$\beta_{ref_i}$
REAL PART
$\beta_{act}$

FIG.12

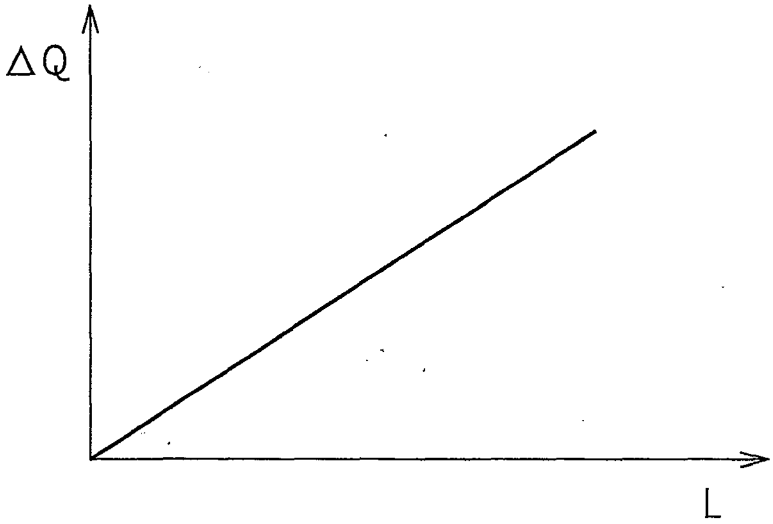
ΔQ
L

FIG.13

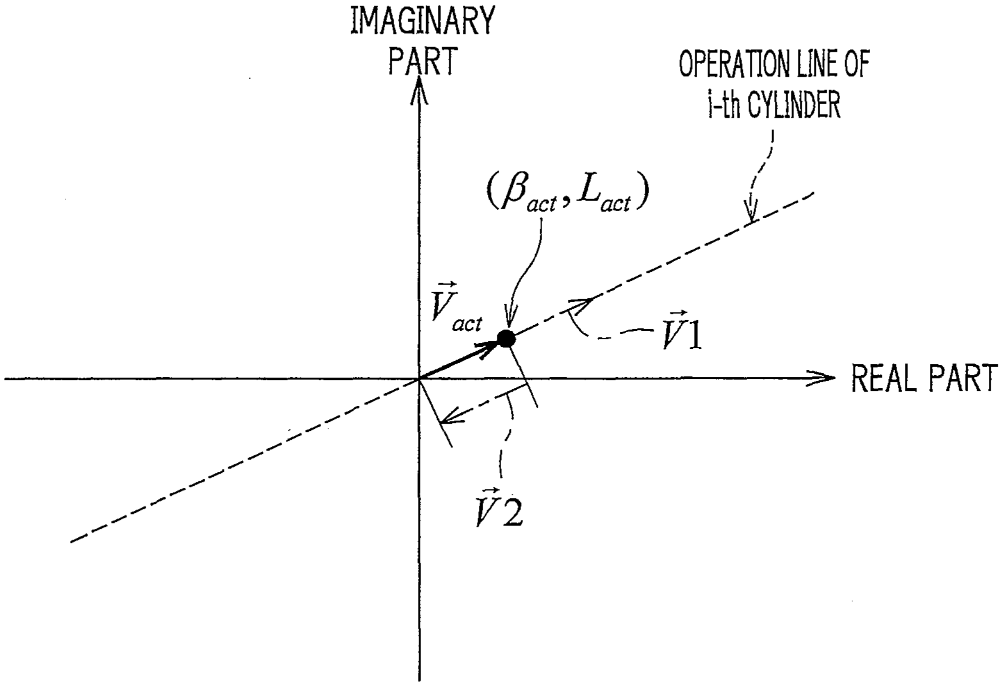
IMAGINARY PART
OPERATION LINE OF i-th CYLINDER
$(\beta_{act}, L_{act})$
$\vec{V}_{act}$
$\vec{V}1$
REAL PART
$\vec{V}2$

FIG.14

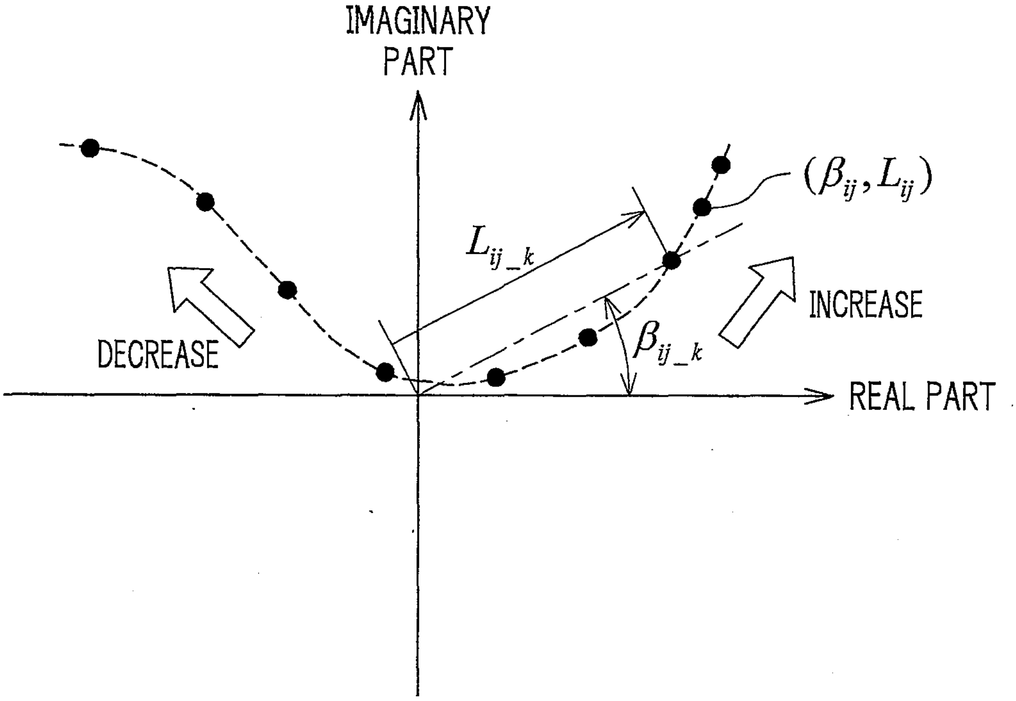


FIG.15

| No. | 1 | 2 | ··· | k | ··· |
|---|---|---|---|---|---|
| $\Delta Q_{ij}$ | $\Delta Q_{ij_1}$ | $\Delta Q_{ij_2}$ | ··· | $\Delta Q_{ij_k}$ | ··· |
| $\beta_{ij}$ | $\beta_{ij_1}$ | $\beta_{ij_2}$ | ··· | $\beta_{ij_k}$ | ··· |
| $L_{ij}$ | $L_{ij_1}$ | $L_{ij_2}$ | ··· | $L_{ij_k}$ | ··· |

FIG.16

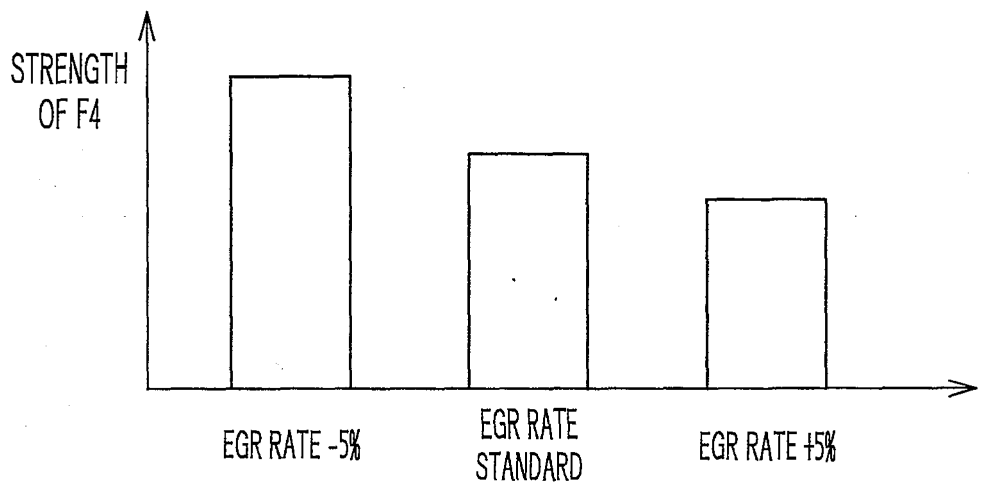

FIG.17

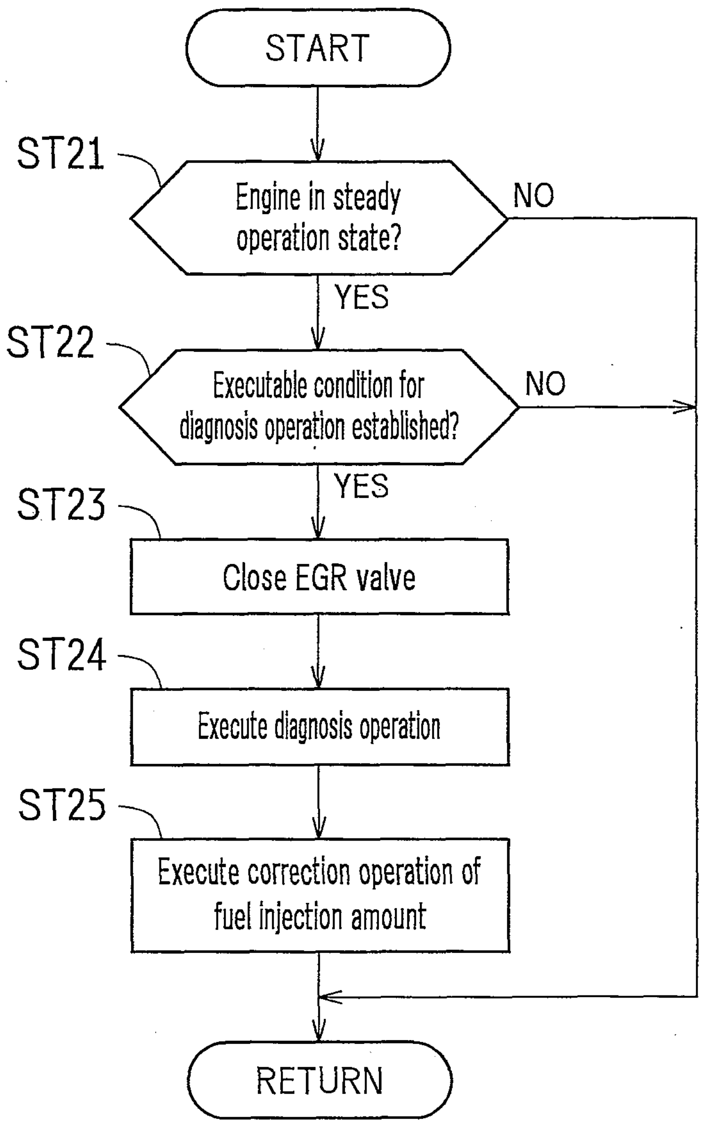
START
ST21
Engine in steady operation state?
NO
YES
ST22
Executable condition for diagnosis operation established?
NO
YES
ST23
Close EGR valve
ST24
Execute diagnosis operation
ST25
Execute correction operation of fuel injection amount
RETURN

FIG.18

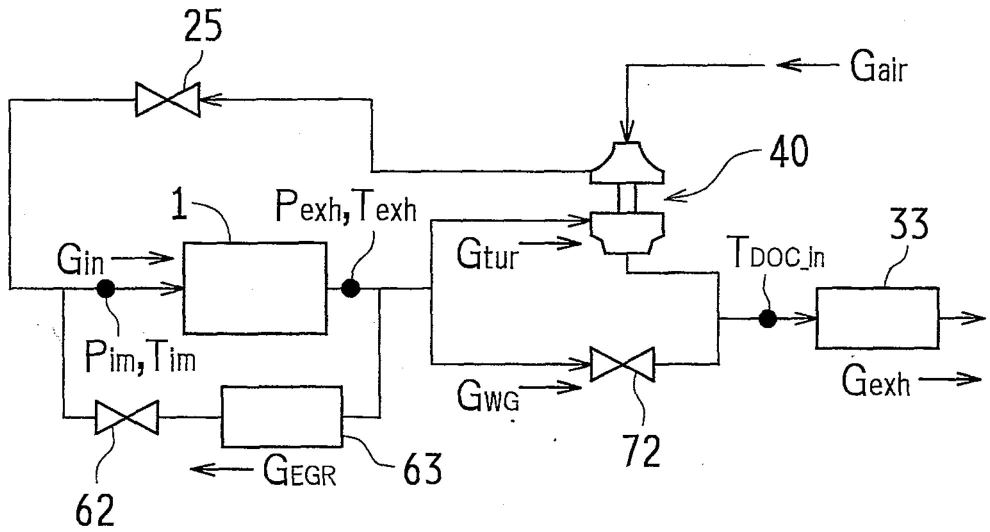
25
Gair
40
1
Pexh,Texh
33
Gin
Gtur
TDOC_in
Pim,Tim
GWG
Gexh
GEGR
63
72
62

FIG.19

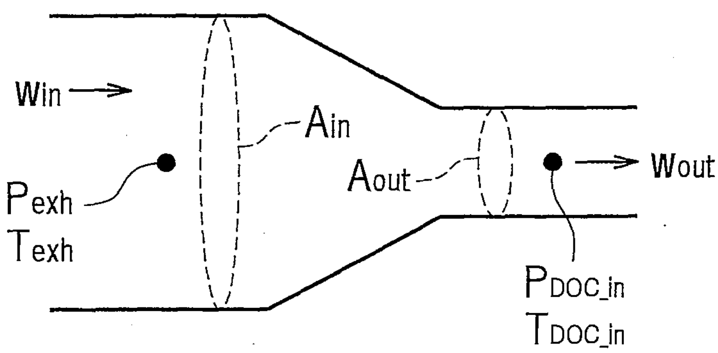
Win
Ain
Aout
Wout
Pexh
Texh
PDOC_in
TDOC_in

FIG.20

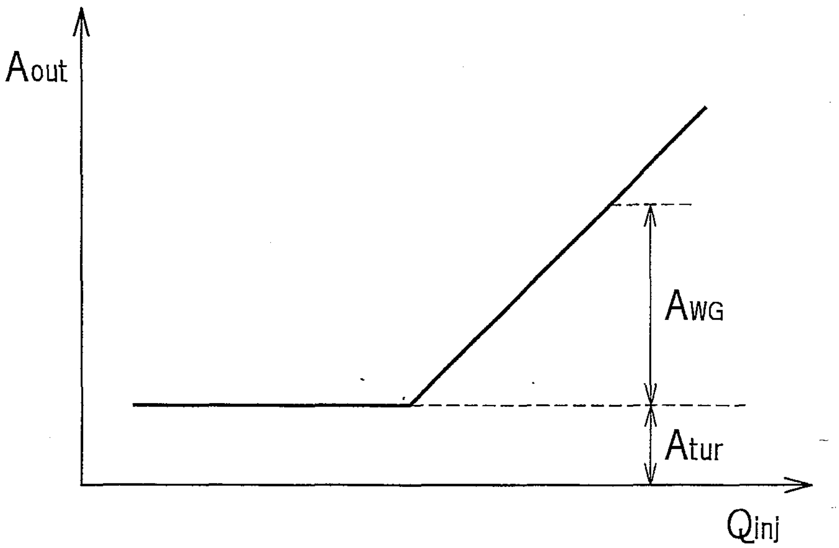

$A_{out}$
$A_{WG}$
$A_{tur}$
$Q_{inj}$


FIG.21

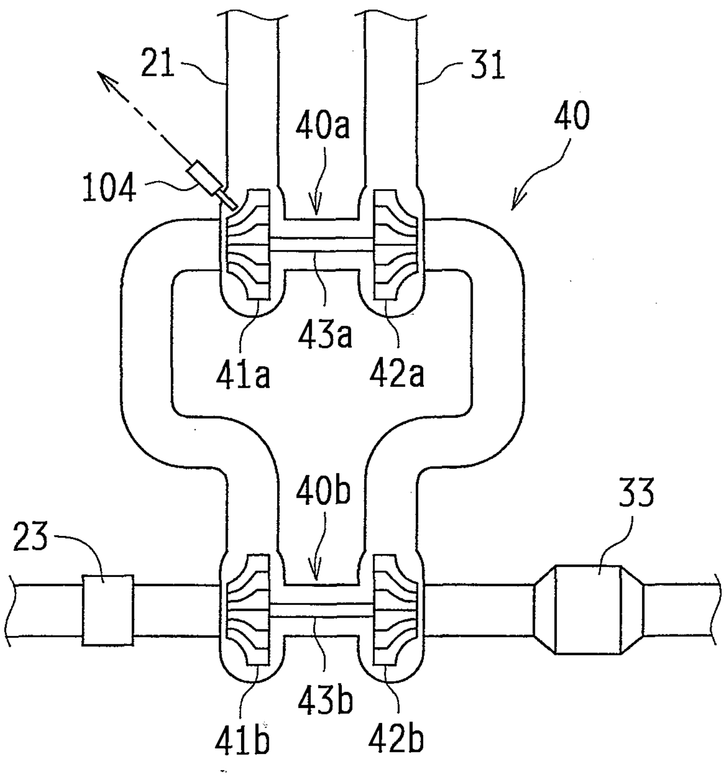

21
31
40a
40
104
43a
41a
42a
40b
33
23
43b
41b
42b

**INTERNATIONAL SEARCH REPORT**

International application No. PCT/JP2017/039567

A. CLASSIFICATION OF SUBJECT MATTER
Int.Cl. F02D45/00(2006.01)i, F02D41/22(2006.01)i

According to International Patent Classification (IPC) or to both national classification and IPC

B. FIELDS SEARCHED

Minimum documentation searched (classification system followed by classification symbols)
Int.Cl. F02D45/00, F02D41/22

Documentation searched other than minimum documentation to the extent that such documents are included in the fields searched

| | |
|---|---|
| Published examined utility model applications of Japan | 1922-1996 |
| Published unexamined utility model applications of Japan | 1971-2017 |
| Registered utility model specifications of Japan | 1996-2017 |
| Published registered utility model applications of Japan | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2011-52616 A (ISUZU MOTORS LTD.) 17 March 2011, paragraphs [0025]-[0026], [0032], [0040]-[0046], [0054]-[0060], [0075]-[0082], [0084], fig. 1-2, 7 (Family: none) | 1, 6-7, 9-10, 12<br>2-5, 8, 11, 13-14 |
| Y | JP 2015-169191 A (FUJI HEAVY INDUSTRIES LTD.) 28 September 2015, paragraphs [0037], [0042], [0047]-[0053], [0058], [0064], fig. 1, 4, 6, 8 & US 2015/0260610 A1, paragraphs [0040], [0043], [0048]-[0052], [0057], [0063], fig. 1, 4, 6, 8 | 1, 6-7, 9-10, 12 |
| Y | JP 2016-31018 A (TOYOTA MOTOR CORP.) 07 March 2016, claims 1-2 & US 2016/0025022 A1, claims 1-2 | 7, 10 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 January 2018 (04.01.2018) | Date of mailing of the international search report<br>16 January 2018 (16.01.2018) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2001065397 A
- JP 5770657 B
- JP 2016228735 A